# EUROPÄISCHE PATENTSCHRIFT

(11) **EP 4 289 033 B1**
(45) Veröffentlichungstag und Bekanntmachung des Hinweises auf die Patenterteilung: **01.01.2025**
(21) Anmeldenummer: 21819766.3
(22) Anmeldetag: 23.11.2021
(51) Int. Cl.: H02H 1/00, H02H 9/00, G05B 19/042

(54) **SYSTEM UND FELDGERÄT**
SYSTEM AND FIELD DEVICE
SYSTÈME ET DISPOSITIF DE TERRAIN

(30) Priorität: 02.02.2021 DE 102021102357
(43) Veröffentlichungstag der Anmeldung: 13.12.2023
(73) Patentinhaber: Beckhoff Automation GmbH, 33415 Verl (DE)
(72) Erfinder: POHL, Christopher, 33415 Verl (DE); RETTIG, Thomas, 33378 Rheda-Wiedenbrück (DE); BRUNS, Benjamin, 29221 Celle (DE); PETROVIC, Sebastian, 32257 Bünde (DE)
(74) Vertreter: Patentanwaltskanzlei WILHELM & BECK
(86) Internationale Anmeldenummer: PCT/EP2021/082655
(87) Internationale Veröffentlichungsnummer: WO 2022/167116

(56) Entgegenhaltungen:
- EP-A1- 3 444 912
- EP-A2- 1 693 944
- US-A1- 2015 109 077
- US-B1- 6 397 322

## Beschreibung

Die vorliegende Erfindung betrifft ein System umfassend ein Einspeisegerät und mehrere mit dem Einspeisegerät elektrisch verbundene Feldgeräte.

Diese Patentanmeldung beansprucht die Priorität der deutschen Patentanmeldung DE 10 2021 102 357.2, deren Offenbarungsgehalt hiermit durch Rückbezug aufgenommen wird.

Ein Automatisierungssystem kann eine Mehrzahl an Sensoren und Aktoren umfassen. Zur elektrischen Energieversorgung kann ein mit derartigen Komponenten elektrisch verbundenes Einspeisegerät zum Einsatz kommen. Das Einspeisegerät kann zusätzlich dazu ausgebildet sein, eine Datenkommunikation mit den Komponenten bzw. eine Steuerung der Komponenten durchzuführen.

In einem möglichen Anwendungsfall befinden sich die Sensoren und Aktoren in einem explosionsgefährdeten Bereich (zum Beispiel Zone 0/20 gemäß der ATEX-Richtlinie; ATEX: Atmosphères Explosibles), und ist das Einspeisegerät in einem nicht oder nur wenig explosionsgefährdeten Bereich (zum Beispiel Zone 2/22 gemäß der ATEX-Richtlinie) angeordnet. Um den Anforderungen an den Explosionsschutz zu genügen, kann das Einspeisegerät über Punkt-zu-Punkt-Verbindungen oder eine andere Verbindungsart wie zum Beispiel eine parallele Verkabelung mit den Sensoren und Aktoren verbunden sein, wobei zu diesem Zweck spezielle Versorgungsleitungen und Steckverbinder eingesetzt werden können. Für diese Bestandteile können der ATEX-Richtlinie entsprechende Ausgestaltungen bzw. Konstruktionsprinzipien zum Gewährleisten des Explosionsschutzes, auch als "Zündschutzart" bezeichnet, zur Anwendung kommen. Möglich ist zum Beispiel eine Ausgestaltung gemäß der Zündschutzart druckfeste Kapselung oder erhöhte Sicherheit. Solche Maßnahmen können mit einem hohen Verkabelungsaufwand und hohen Kosten verbunden sein.

Die Norm PD IEC/TS 60079-39:2015 "Explosive atmospheres - Part 39: Intrinsically safe systems with electronically controlled spark duration limitation" beschreibt ein System umfassend wenigstens ein Feldgerät (Power-i field device) und eine mit dem Feldgerät elektrisch verbundene Einspeisequelle (Power-i source). Die Einspeisequelle dient zur elektrischen Energieversorgung des Feldgeräts, und wird ferner zur Überwachung der elektrischen Energieversorgung eingesetzt. Hierfür ist die Einspeisequelle dazu ausgebildet, eine Funkenentstehung bei der elektrischen Energieversorgung des Feldgeräts zu erfassen, um hierauf basierend die Energieversorgung abzuschalten. Eine marktreife Umsetzung des in dieser Norm angegebenen Konzepts ist bislang nicht erfolgt.

Die EP 3 444 912 A1 beschreibt ein Automatisierungssystem umfassend Steuervorrichtungen, Eingabe/Ausgabe-Module und Sensoren und Aktoren. Mit Bezug auf die Eingabe/Ausgabe-Module kommt eine intrinsische Sicherheitsbarriere zum Einsatz. Die Sicherheitsbarriere umfasst ein Isolationsmodul und eine IS-Barriere-Hardware. Das Isolationsmodul weist einen Einschaltstrombegrenzer auf. Die IS-Barriere-Hardware weist eine energiebegrenzende Schaltung auf.

Weiterer Stand der Technik ist aus der US 2015/0109077 A1 und der US 6,397,322 B1 bekannt.

Die Aufgabe der vorliegenden Erfindung besteht darin, eine Lösung für ein verbessertes System anzugeben, mit dessen Hilfe Komponenten wie Aktoren und Sensoren, welche sich in einem explosionsgefährdeten Bereich befinden können, elektrisch versorgt werden können.

Diese Aufgabe wird durch die Merkmale des unabhängigen Patentanspruchs 1 gelöst. Weitere vorteilhafte Ausführungsformen der Erfindung sind in den abhängigen Ansprüchen angegeben.

Gemäß der Erfindung wird ein System vorgeschlagen, welches ein Einspeisegerät und mehrere mit dem Einspeisegerät elektrisch verbundene Feldgeräte umfasst. Das Einspeisegerät ist ausgebildet, eine elektrische Energie zur elektrischen Energieversorgung der Feldgeräte bereitzustellen. Das Einspeisegerät weist eine Überwachungseinrichtung auf, welche ausgebildet ist, eine Funkenentstehung bei der elektrischen Energieversorgung zu erfassen und hierauf basierend die elektrische Energieversorgung abzuschalten. Die Feldgeräte weisen jeweils einen ersten Gerätebereich mit einem Eingangsanschluss zum Anschließen einer Versorgungsleitung und einen zweiten Gerätebereich auf. Die von dem Einspeisegerät bereitgestellte elektrische Energie kann über den Eingangsanschluss dem ersten Gerätebereich zugeführt und über eine elektrische Energieversorgungsverbindung von dem ersten Gerätebereich zu dem zweiten Gerätebereich übertragen werden. Der zweite Gerätebereich weist eine Anschlusseinrichtung mit wenigstens einem Ausgangsleitungsanschluss zum Anschließen wenigstens einer Ausgangsleitung auf, um die zu dem zweiten Gerätebereich übertragene elektrische Energie weiterzuleiten. Die elektrische Energieversorgungsverbindung des ersten und zweiten Gerätebereichs weist eine Leistungsbegrenzungseinrichtung auf, welche ausgebildet ist, eine Begrenzung einer von dem ersten Gerätebereich zu dem zweiten Gerätebereich im Rahmen der Energieübertragung übertragbaren elektrischen Leistung hervorzurufen.

Die Feldgeräte des vorgeschlagenen Systems weisen einen ersten Gerätebereich mit einem Eingangsanschluss und einen zweiten Gerätebereich mit einer Anschlusseinrichtung mit wenigstens einem Ausgangsleitungsanschluss auf. Über den Eingangsanschluss und eine daran angeschlossene Versorgungsleitung kann die von dem Einspeisegerät des Systems bereitgestellte elektrische Energie in den ersten Gerätebereich eingebracht werden. Der erste Gerätebereich und der zweite Gerätebereich sind über eine elektrische Energieversorgungsverbindung miteinander verbunden, über welche die dem ersten Gerätebereich zugeführte elektrische Energie weiter in den zweiten Gerätebereich eingespeist werden kann. Ausgehend hiervon kann die elektrische Energie über die Anschlusseinrichtung des zweiten Gerätebereichs und wenigstens eine daran angeschlossene Ausgangsleitung weitergeleitet werden. Auf diese Weise kann eine mit der Ausgangsleitung verbundene externe Einrichtung bzw. Komponente, zum Beispiel ein Sensor oder ein Aktor, welche im Folgenden als Feldkomponente bezeichnet wird, elektrisch versorgt werden. Je nach Ausgestaltung können auch mehrere Feldkomponenten bzw. mehrere Sensoren und/oder Aktoren über mehrere Ausgangsleitungen an die Anschlusseinrichtung angeschlossen sein und dadurch energetisch versorgt werden.

Das Einspeisegerät des Systems dient, neben dem Bereitstellen der elektrischen Energie, auch zum Überwachen der elektrischen Energieversorgung der Feldgeräte. Das Einspeisegerät ist zu diesem Zweck ausgebildet, einen bei der elektrischen Energieversorgung aufgrund eines Fehlers auftretenden Funken bzw. Lichtbogen in dessen Entstehung zu erfassen und hierauf basierend mit einer niedrigen Latenz die elektrische Energieversorgung abzuschalten, um den Funken zu terminieren. Durch die hierdurch erzielte Funkendauerbegrenzung kann mit einer hohen bzw. ausreichenden Zuverlässigkeit verhindert werden, dass bei einem Fehlerfall ein Funke bzw. Zündfunke mit für eine Zündung ausreichender Energie im Bereich der Eingangsanschlüsse der ersten Gerätebereiche der Feldgeräte sowie im Bereich der an die Feldgeräte angeschlossenen Versorgungsleitungen erzeugt wird.

Wie weiter unten näher beschrieben wird, kann der erste Gerätebereich wenigstens eines Feldgeräts wenigstens einen Ausgangsanschluss zum Anschließen einer weiteren Versorgungsleitung aufweisen, um die dem ersten Gerätebereich zugeführte elektrische Energie weiterzuleiten. In entsprechender Weise kann aufgrund der Funkendauerbegrenzung ein Erzeugen eines Funkens mit für eine Zündung ausreichender Energie im Bereich des wenigstens einen Ausgangsanschlusses zuverlässig verhindert werden.

Mit Bezug auf die zweiten Gerätebereiche der Feldgeräte und hieran über Ausgangsleitungen angeschlossene Feldkomponenten (Sensoren und/oder Aktoren) kann ein zuverlässiger und sicherer Schutz dadurch erzielt werden, dass bei den Feldgeräten die elektrische Energieversorgungsverbindung des ersten und zweiten Gerätebereichs eine Leistungsbegrenzungseinrichtung aufweist. Mit Hilfe der Leistungsbegrenzungseinrichtung kann eine Begrenzung der von dem ersten Gerätebereich zu dem zweiten Gerätebereich übertragbaren bzw. maximal übertragbaren elektrischen Leistung bewirkt werden. Auf diese Weise kann sichergestellt werden, dass die an den Anschlusseinrichtungen bzw. Ausgangsleitungsanschlüssen der zweiten Gerätebereiche der Feldgeräte zur Verfügung stehende elektrische Energie limitiert ist und nicht ausreicht, um im Fehlerfall einen Funken bzw. Zündfunken im Bereich der Anschlusseinrichtungen bzw. Ausgangsleitungsanschlüsse der zweiten Gerätebereiche, und damit auch im Bereich der Ausgangsleitungen und der hiermit verbundenen Feldkomponenten, zu erzeugen.

Aufgrund der vorgenannten Eigenschaften steht für das System zum Beispiel folgendes Anwendungsszenario zur Verfügung. An die zweiten Gerätebereiche der Feldgeräte über Ausgangsleitungen angeschlossene Feldkomponenten (Sensor- und/oder Aktor-Komponenten) können sich in einem explosionsgefährdeten Bereich (zum Beispiel Zone 0/20 gemäß der ATEX-Richtlinie) befinden. Die Feldgeräte können in einem weniger explosionsgefährdeten Bereich (zum Beispiel Zone 1/21 gemäß der ATEX-Richtlinie) angeordnet sein. Das Einspeisegerät kann sich in einem nicht oder nur wenig explosionsgefährdeten Bereich (zum Beispiel Zone 2/22 gemäß der ATEX-Richtlinie) befinden.

Die Schutzmechanismen, welche durch die Überwachung der elektrischen Energieversorgung der Feldgeräte und durch die Leistungslimitierung innerhalb der Feldgeräte bereitgestellt werden können, machen es in diesem Zusammenhang möglich, einfache und kostengünstige Bauformen für die verwendeten Versorgungsleitungen und Ausgangsleitungen, und für an den Leitungen angeordnete Steckverbinder, mit deren Hilfe die Leitungen an Bestandteile wie die Feldgeräte und Feldkomponenten angeschlossen werden können, vorzusehen. Des Weiteren besteht die Möglichkeit, eine relativ große elektrische Leistung in die ersten Gerätebereiche der Feldgeräte einzuspeisen.

Im Folgenden werden weitere mögliche Details und Ausführungsformen näher beschrieben, welche für das System und dessen Bestandteile in Betracht kommen können.

Bei der mit Hilfe des Einspeisegeräts bereitgestellten elektrischen Energie kann es sich um einen elektrischen Gleichstrom (DC, Direct Current) handeln. Für das Bereitstellen der elektrischen Energie kann das Einspeisegerät mit einer Stromquelle bzw. Gleichstromquelle elektrisch verbunden sein und auf diese Weise durch die Stromquelle elektrisch gespeist werden.

Die Feldgeräte des Systems können wie oben beschrieben mit Feldkomponenten wie Sensoren und/oder Aktoren verbunden sein, um diese elektrisch zu versorgen. In diesem Sinne können die Feldgeräte als Energieverteiler für die Feldkomponenten dienen. Die Feldkomponenten können dem System zugerechnet werden und dadurch Bestandteile des Systems sein. Entsprechendes gilt für verwendete Leitungen wie Versorgungsleitungen und Ausgangsleitungen und deren Steckverbinder.

Innerhalb des ersten und zweiten Gerätebereichs der Feldgeräte kann die elektrische Energie u.a. über interne elektrische Leiter transportiert werden. Eine solche Ausgestaltung kann auch in Bezug auf die elektrische Energieversorgungsverbindung des ersten und zweiten Gerätebereichs zutreffen, welche zusätzlich zu der Leistungsbegrenzungseinrichtung entsprechende elektrische Leiter umfassen kann. Die elektrischen Leiter können zum Beispiel in Form von Leiterbahnen vorliegen.

Die Anschlusseinrichtung des zweiten Gerätebereichs der Feldgeräte dient wie oben beschrieben zum Anschließen von wenigstens einer bzw. mehreren Ausgangsleitungen, über welche in entsprechender Weise ein oder mehrere Feldkomponenten (Sensoren und/oder Aktoren) elektrisch versorgt werden können. Die Anschlusseinrichtung weist zu diesem Zweck wie oben beschrieben wenigstens einen Ausgangsleitungsanschluss zum Anschließen einer Ausgangsleitung auf.

Eine zuverlässige Begrenzung der von dem ersten zu dem zweiten Gerätebereich übertragbaren elektrischen Leistung kann gemäß einer weiteren Ausführungsform dadurch erzielt werden, dass die Leistungsbegrenzungseinrichtung der Feldgeräte ausgebildet ist, eine Strombegrenzung und eine Spannungsbegrenzung hervorzurufen. Zu diesem Zweck kann die Leistungsbegrenzungseinrichtung elektrische Bauelemente wie zum Beispiel wenigstens einen Widerstand und wenigstens ein spannungsbegrenzendes Bauelement bzw. Halbleiter-Bauelement wie beispielsweise eine Zener-Diode aufweisen. Ferner kann wenigstens eine Schmelzsicherung, gegebenenfalls zusammen mit einem optionalen Schutzwiderstand, zur Anwendung kommen. Mit Hilfe wenigstens eines Widerstands kann eine Strombegrenzung erzielt werden. Mit Hilfe wenigstens eines spannungsbegrenzenden Bauelements kann eine Spannungsbegrenzung bewirkt werden. Sofern hierfür eine Zener-Diode eingesetzt wird, kann diese in Sperrrichtung betrieben werden. Über eine Schmelzsicherung und einen gegebenenfalls verwendeten Schutzwiderstand kann eine Absicherung, zum Beispiel in Bezug auf das wenigstens eine spannungsbegrenzende Bauelement, erzielt werden. Anstelle von wenigstens einer Zener-Diode kann auch wenigstens ein anderes sich zur Spannungsbegrenzung eignendes Halbleiter-Bauelement, zum Beispiel ein Thyristor, zur Anwendung kommen.

Die Anschlusseinrichtung des zweiten Gerätebereichs der Feldgeräte kann mehrere Ausgangsleitungsanschlüsse aufweisen, wodurch mehrere Ausgangsleitungen an die Anschlusseinrichtung angeschlossen werden können. Die Leistungsbegrenzungseinrichtung kann in diesem Zusammenhang ausgebildet sein, eine gemeinsame Strombegrenzung und Spannungsbegrenzung für die Ausgangsleitungsanschlüsse hervorzurufen. Die Leistungsbegrenzungseinrichtung kann ferner zum Hervorrufen von mehreren separaten und gegebenenfalls unterschiedlichen Strombegrenzungen und/oder zum Hervorrufen von mehreren separaten und gegebenenfalls unterschiedlichen Spannungsbegrenzungen ausgebildet sein. Auf diese Weise können separate und gegebenenfalls unterschiedliche Strombegrenzungen und/oder Spannungsbegrenzungen in Bezug auf einzelne oder mehrere Ausgangsleitungsanschlüsse vorliegen. Die Leistungsbegrenzungseinrichtung kann zum Beispiel dahingehend ausgebildet sein, dass für die Ausgangsleitungsanschlüsse eine gemeinsame Spannungsbegrenzung und mehrere kleinteilige bzw. aufgegliederte Strombegrenzungen vorliegen, d.h. dass separate und gegebenenfalls unterschiedliche Strombegrenzungen in Bezug auf einzelne und/oder mehrere Ausgangsleitungsanschlüsse bzw. Gruppen von Ausgangsleitungsanschlüssen vorgesehen sind.

Gemäß der Erfindung weist der erste Gerätebereich der Feldgeräte eine Entkopplungseinrichtung auf, welche ausgebildet ist, eine vorgegebene Eingangsimpedanz für das Erfassen der Funkenentstehung bereitzustellen. Auf diese Weise können die Feldgeräte ein bekanntes und vorhersagbares elektrisches Verhalten besitzen, was das Erfassen einer Funkenentstehung durch das Einspeisegerät bei einem Fehlerfall mit einer hohen bzw. ausreichenden Zuverlässigkeit möglich macht. Die Entkopplungseinrichtung kann zwischen dem Eingangsanschluss und der Leistungsbegrenzungseinrichtung angeordnet sein. Die Entkopplungseinrichtung kann Bauelemente wie einen LC-Tiefpass mit einer Induktivität und wenigstens einer Kapazität aufweisen. Des Weiteren kann wenigstens ein Bauelement bzw. Halbleiter-Bauelement wie beispielsweise eine Diode zum Vorgeben einer Stromflussrichtung vorgesehen sein. Ein weiterer möglicher Bestandteil ist eine Spannungsbegrenzungseinrichtung, zum Beispiel in Form einer aus spannungsbegrenzenden Bauelementen bzw. Halbleiter-Bauelementen wie beispielsweise Dioden aufgebauten Klemmschaltung, welche parallel zu der Induktivität geschaltet sein kann.

In einer weiteren Ausführungsform weist der erste Gerätebereich der Feldgeräte ein internes Netzteil auf, welches über die dem ersten Gerätebereich zugeführte elektrische Energie elektrisch versorgt werden kann. Mit Hilfe des internen Netzteils eines Feldgeräts kann wenigstens eine in dem Feldgerät je nach Ausgestaltung vorhandene interne Einrichtung bzw. Komponente mit elektrischer Energie versorgt werden. Hierunter kann zum Beispiel eine Steuereinrichtung wie beispielsweise ein Kommunikationscontroller fallen, wie er weiter unten beschrieben wird. Der Kommunikationscontroller kann ein monolithischer oder diskreter Kommunikationscontroller sein.

In einer weiteren Ausführungsform weist der erste Gerätebereich wenigstens eines Feldgeräts wie oben erwähnt wenigstens einen Ausgangsanschluss zum Anschließen einer weiteren Versorgungsleitung auf, um die dem ersten Gerätebereich zugeführte elektrische Energie weiterzuleiten. Der wenigstens eine Ausgangsanschluss kann mit dem Eingangsanschluss des zugehörigen ersten Gerätebereichs elektrisch verbunden sein. Mit Bezug auf diese Ausführungsform ist es möglich, dass eine an einen Ausgangsanschluss eines Feldgeräts angeschlossene Versorgungsleitung an einen Eingangsanschluss eines weiteren Feldgeräts angeschlossen ist, so dass die elektrische Energie von dem einen Feldgerät zu dem weiteren Feldgerät weitergeleitet werden kann.

Basierend auf der vorgenannten Ausführungsform bzw. für den Fall, dass mehrere oder sämtliche Feldgeräte des Systems wenigstens einen Ausgangsanschluss aufweisen, ist ferner folgende Ausgestaltung für das System denkbar.

In einer weiteren Ausführungsform ist das Einspeisegerät über eine Versorgungsleitung mit einem der Feldgeräte verbunden, und sind die Feldgeräte untereinander über weitere und jeweils zwei Feldgeräte verbindende Versorgungsleitungen miteinander verbunden. Dieser Aufbau kann sich durch einen geringen Verkabelungsaufwand auszeichnen. Die die Feldgeräte verbindenden Versorgungsleitungen können dabei an Eingangsanschlüsse und Ausgangsanschlüsse von Feldgeräten angeschlossen sein. Die das Einspeisegerät mit einem der Feldgeräte verbindende Versorgungsleitung kann an einen Einspeisegerät-Ausgangsanschluss des Einspeisegeräts und einen Eingangsanschluss des betreffenden Feldgeräts angeschlossen sein.

In der vorgenannten Ausführungsform kann die von dem Einspeisegerät bereitgestellte elektrische Energie einem Feldgerät zugeführt und hiervon ausgehend an die weiteren Feldgeräte, d.h. jeweils von einem zu einem weiteren Feldgerät, weitergeleitet werden. Die Feldgeräte können des Weiteren die ihnen auf diese Weise zur Verfügung gestellte elektrische Energie über hieran angeschlossene Ausgangsleitungen an weitere Feldkomponenten (Sensoren- und/oder Aktoren) weiter verteilen.

Es ist möglich, dass wenigstens ein Feldgerät mit mehreren Ausgangsanschlüssen ausgebildet ist. In dieser Ausgestaltung kann das betreffende Feldgerät als Energieverteiler dienen und die elektrische Energie über mehrere Versorgungsleitungen an mehrere Feldgeräte weiterleiten.

In einer weiteren Ausführungsform weist der erste Gerätebereich des wenigstens einen mit dem wenigstens einen Ausgangsanschluss versehenen Feldgeräts eine zwischen dem Eingangsanschluss und dem wenigstens einen Ausgangsanschluss angeordnete Schalteinrichtung auf, mit deren Hilfe das Weiterleiten der dem ersten Gerätebereich zugeführten elektrischen Energie geschaltet werden kann. Sofern eine Ausgestaltung mit mehreren Ausgangsanschlüssen vorliegt, kann in entsprechender Weise zwischen dem Eingangsanschluss und jedem der Ausgangsanschlüsse jeweils eine Schalteinrichtung vorgesehen sein. Diese Ausführungsform macht es möglich, den Eingangsanschluss und den wenigstens einen Ausgangsanschluss voneinander zu trennen, und das Weiterleiten der elektrischen Energie über den wenigstens einen Ausgangsanschluss zu steuern. Eine Ansteuerung der wenigstens einen Schalteinrichtung kann zum Beispiel mit Hilfe des weiter unten beschriebenen Kommunikationscontrollers erfolgen.

Gemäß der Erfindung weist der erste Gerätebereich der Feldgeräte einen Einschaltstrombegrenzer auf, welcher ausgebildet ist, einen Einschaltstrom bei einem Beginn der elektrischen Energieversorgung zu begrenzen. Auf diese Weise kann vermieden werden, dass bei einem Beginn der elektrischen Energieversorgung ein hoher bzw. überhöhter Einschaltstrom bei einem oder mehreren Feldgeräten auftritt mit der Folge, dass ein fehlerhaftes Abschalten der elektrischen Energieversorgung durch das Einspeisegerät durchgeführt wird, obwohl keine Funkenentstehung vorliegt.

Der Einschaltstrombegrenzer kann Bauelemente wie einen Transistor, einen mit dem Transistor seriell verbundenen Widerstand und einen Regler umfassen. Mit Hilfe des Reglers kann der über den Widerstand fließende Strom gemessen und hiervon abhängig der Transistor derart gesteuert und damit der Spannungsabfall über den Transistor derart geregelt werden, dass ein Auftreten eines überhöhten Stroms vermieden wird.

In einer möglichen Ausgestaltung, die nicht der Erfindung entspricht, kann der Einschaitstrombegrenzer zwischen der Entkopplungseinrichtung und dem Eingangsanschluss angeordnet sein. In dieser Ausgestaltung kann der Einschaltstrombegrenzer sicherheitstechnischen Anforderungen unterliegen, zum Beispiel im Hinblick auf ein Bereitstellen einer Redundanz.

Gemäß der Erfindung ist der Einschaltstrombegrenzer der Feldgeräte zwischen der Entkopplungseinrichtung und der Leistungsbegrenzungseinrichtung angeordnet. Auf diese Weise können weniger strenge Anforderungen in Bezug auf den Einschaltstrombegrenzer bestehen, welcher insofern gemäß einer einfachen Ausgestaltung verwirklicht sein kann.

In einer weiteren Ausführungsform weisen die Feldgeräte eine galvanische Trennung auf. Hierdurch kann die dem ersten Gerätebereich zugeführte elektrische Energie auf getrennten elektrischen Stromkreisen geführt werden. Diese Ausführungsform begünstigt einen zuverlässigen und sicheren Betrieb des Systems. Die galvanisch getrennten Stromkreise können wenigstens teilweise durch die Feldgeräte bzw. Bestandteile der Feldgeräte gebildet sein.

Eine galvanische Trennung kann in dem ersten Gerätebereich und/oder in der elektrischen Energieversorgungsverbindung des ersten und zweiten Gerätebereichs ausgebildet sein. In diesem Zusammenhang ist es möglich, die Leistungsbegrenzungseinrichtung mit einer galvanischen Trennung auszubilden. Zum Verwirklichen einer galvanischen Trennung können Bauelemente wie ein Übertrager, ein dem Übertrager vorgeordneter Wechselrichter, ein dem Übertrager nachgeordneter Gleichrichter und ein Glättungskondensator zum Einsatz kommen.

Es besteht die Möglichkeit, eine galvanische Trennung in dem Einspeisegerät vorzusehen. Auf diese Weise können die Feldgeräte ohne galvanische Trennung ausgestaltet sein.

Mit Bezug auf das oben beschriebene Anwendungsszenario, in welchem an die Feldgeräte über Ausgangsleitungen angeschlossene Feldkomponenten (Sensoren und/oder Aktoren) in einem explosionsgefährdeten Bereich und die Feldgeräte in einem weniger explosionsgefährdeten Bereich angeordnet sind, kann ferner folgende Ausführungsform in Betracht kommen, um einen sicheren Betrieb des Systems zu ermöglichen. Hierbei sind die Anschlüsse des ersten Gerätebereichs der Feldgeräte, d.h. der Eingangsanschluss des ersten Gerätebereichs der Feldgeräte und, sofern vorhanden, wenigstens ein Ausgangsanschluss des ersten Gerätebereichs wenigstens eines Feldgeräts, gemäß einer ersten Zündschutzart ausgebildet. Ferner sind die Anschlüsse des zweiten Gerätebereichs der Feldgeräte, d.h. der wenigstens eine Ausgangsleitungsanschluss des zweiten Gerätebereichs der Feldgeräte, gemäß einer zweiten Zündschutzart ausgebildet. Die zweite Zündschutzart entspricht dabei einem größeren Schutzniveau als die erste Zündschutzart.

Es ist zum Beispiel möglich, dass die zweite Zündschutzart die Zündschutzart Eigensicherheit Ex ia, und dass die erste Zündschutzart die Zündschutzart Eigensicherheit Ex ib ist. Das Erfüllen der unterschiedlichen Schutzarten kann dadurch verwirklicht sein, dass im Bereich der jeweiligen Anschlüsse des ersten und zweiten Gerätebereichs der Feldgeräte vorhandene Bestandteile wie interne Komponenten und elektrische Leiter zu den Zündschutzarten korrespondierende Ausgestaltungen, zum Beispiel im Hinblick auf Abstände und Redundanzen, aufweisen. Die Überwachungsfunktion des Einspeisegeräts kann ebenfalls zur Eigensicherheit Ex ib der Anschlüsse des ersten Gerätebereichs der Feldgeräte beitragen. Hinsichtlich der Anschlüsse des zweiten Gerätebereichs kann die Leistungslimitierung aufgrund der Leistungsbegrenzungseinrichtung zur Eigensicherheit Ex ia beitragen.

Für das Erzielen einer hohen Sicherheit des Systems kann es ferner zum Beispiel in Betracht kommen, die Feldgeräte mit einer Vergusskapselung auszubilden. Hierbei können die Feldgeräte bzw. deren Gehäuse mit einer Vergussmasse verfüllt sein, was das Eindringen eines explosionsfähigen Gemisches in die Feldgeräte verhindern kann. Auf diese Weise können die Feldgeräte gemäß der Zündschutzart Ex mb ausgestaltet sein. Es ist ferner eine weitere bzw. äquivalente Schutzart für die Feldgeräte möglich, zum Beispiel eine Ausgestaltung mit einer druckfesten Kapselung. Hierdurch können die Feldgeräte gemäß der Zündschutzart Ex db ausgebildet sein.

Das System bzw. dessen Feldgeräte können nicht nur zur Anwendung kommen, um an die Feldgeräte angeschlossene Feldkomponenten (Sensoren- und/oder Aktoren) elektrisch zu versorgen, sondern auch um eine Datenkommunikation und Steuerung mit Bezug auf diese Komponenten durchzuführen. Das System kann in diesem Sinne als Automatisierungssystem ausgestaltet sein. In diesem Zusammenhang können im Folgenden erläuterte Ausgestaltungen zur Anwendung kommen.

In einer weiteren Ausführungsform sind die Feldgeräte zum Durchführen einer Datenkommunikation ausgebildet, indem der erste Gerätebereich wenigstens einen Kommunikationsanschluss zum Anschließen einer Datenleitung zum Empfangen und/oder Senden von Datensignalen und einen mit dem wenigstens einen Kommunikationsanschluss verbundenen Kommunikationscontroller aufweist. Auf diese Weise kann der Kommunikationscontroller Datensignale über den Kommunikationsanschluss empfangen und/oder senden. Der Kommunikationscontroller ist über eine Kommunikationsverbindung mit der Anschlusseinrichtung des zweiten Gerätebereichs verbunden, um Datensignale über die Anschlusseinrichtung zu empfangen und/oder zu senden. Die Kommunikationsverbindung des Kommunikationscontrollers und der Anschlusseinrichtung weist eine Barriereeinrichtung auf, welche ausgebildet ist, eine Begrenzung einer von dem Kommunikationscontroller zu der Anschlusseinrichtung bei einer Datenkommunikation übertragbaren elektrischen Leistung und/oder eine galvanische Trennung hervorzurufen.

Die vorgenannte Ausführungsform bietet die Möglichkeit, über die Feldgeräte bzw. über deren Kommunikationscontroller eine Datenkommunikation mit an die Anschlusseinrichtungen bzw. Ausgangsleitungsanschlüsse über Ausgangsleitungen angeschlossenen Feldkomponenten (Sensoren und/oder Aktoren) durchzuführen. Es können zum Beispiel Sensordaten bzw. Sensorsignale von Sensoren ausgelesen und über die Feldgeräte weitergeleitet werden. Ferner können Steuerdaten bzw. Steuersignale an Aktoren übertragen werden.

Das System kann in diesem Zusammenhang ferner eine übergeordnete und in geeigneter Weise mit den Feldgeräten verbundene Steuervorrichtung aufweisen, zu welcher die Feldgeräte bzw. deren Kommunikationscontroller solche Datensignale übertragen und/oder von welcher die Feldgeräte bzw. deren Kommunikationscontroller solche Datensignale empfangen können.

Wenigstens ein Feldgerät bzw. mehrere oder sämtliche Feldgeräte des Systems können des Weiteren mehrere oder zwei mit dem zugehörigen Kommunikationscontroller verbundene Kommunikationsanschlüsse aufweisen. Auf diese Weise kann eine Datenkommunikation ferner (jeweils) über zwei durch eine Datenleitung verbundene Feldgeräte oder über mehrere durch Datenleitungen verbundene Feldgeräte erfolgen.

Bei den zur Datenkommunikation ausgebildeten Feldgeräten weist die Kommunikationsverbindung des Kommunikationscontrollers des ersten Gerätebereichs und der Anschlusseinrichtung des zweiten Gerätebereichs wie oben angegeben eine Barriereeinrichtung auf. Mit Hilfe der Barriereeinrichtung kann erzielt werden, dass die elektrische Leistung, welche im Zuge der Datenkommunikation in den zweiten Gerätebereich der Feldgeräte eingebracht werden kann, limitiert ist. Hierdurch kann sichergestellt werden, dass aufgrund der Datenkommunikation kein Funke bzw. Zündfunke im Bereich der Anschlusseinrichtungen bzw. Ausgangsleitungsanschlüsse der zweiten Gerätebereiche der Feldgeräte, und damit auch im Bereich der Ausgangsleitungen und der über die Ausgangsleitungen an die Feldgeräte angeschlossenen Feldkomponenten (Sensoren und/oder Aktoren), hervorgerufen werden kann. Infolgedessen steht das oben beschriebene Anwendungsszenario, in welchem an die Feldgeräte angeschlossene Feldkomponenten in einem explosionsgefährdeten Bereich und die Feldgeräte in einem weniger explosionsgefährdeten Bereich angeordnet sind, in entsprechender Weise für das System mit den zur Datenkommunikation ausgebildeten Feldgeräten zur Verfügung.

Innerhalb des ersten und zweiten Gerätebereichs der Feldgeräte kann die Datenkommunikation u.a. über interne Datenverbindungen bzw. Datenleitungen mit entsprechenden elektrischen Leitern erfolgen. Eine solche Ausgestaltung kann auch in Bezug auf die Kommunikationsverbindung des ersten und zweiten Gerätebereichs zutreffen, welche zusätzlich zu der Barriereeinrichtung entsprechende Datenleitungen bzw. elektrische Leiter umfassen kann. Die elektrischen Leiter können zum Beispiel in Form von Leiterbahnen vorliegen.

Die Barriereeinrichtung der Kommunikationsverbindung des ersten und zweiten Gerätebereichs der Feldgeräte kann in Form eines Digitalisolators wie zum Beispiel eines Optokopplers oder eines Magnetkopplers verwirklicht sein. Auf diese Weise kann eine zuverlässige Leistungslimitierung zusammen mit einer galvanischen Trennung durch die Barriereeinrichtung erzielt werden.

In einer weiteren Ausführungsform weist die Anschlusseinrichtung des zweiten Gerätebereichs der Feldgeräte einen Eingabe/Ausgabe-Controller auf. Der Eingabe/Ausgabe-Controller kann dazu ausgebildet sein, ein Empfangen und/oder Senden von Datensignalen über die Anschlusseinrichtung zu steuern. Auf diese Weise ist eine zuverlässige Datenkommunikation mit an die Anschlusseinrichtungen bzw. Ausgangsleitungsanschlüsse der Feldgeräte über Ausgangsleitungen angeschlossenen Feldkomponenten (Sensoren und/oder Aktoren) möglich. Der Eingabe/Ausgabe-Controller kann über die Kommunikationsverbindung mit dem zugehörigen Kommunikationscontroller des ersten Gerätebereichs kommunizieren, um entsprechende Datensignale zu dem Kommunikationscontroller zu senden bzw. von diesem zu empfangen. Der Eingabe/Ausgabe-Controller kann zusätzlich oder alternativ ausgebildet sein, ein Weiterleiten von elektrischer Energie über die Anschlusseinrichtung zu steuern. Hierdurch kann das Weiterleiten und dadurch Verteilen der elektrischen Energie über die Anschlusseinrichtung flexibel festgelegt werden. Dies kann zum Beispiel durch den Kommunikationscontroller gesteuert werden, welcher hierzu entsprechende Datensignale bzw. Steuerdaten an den Eingabe/Ausgabe-Controller übermitteln kann. In den vorgenannten Fällen kann die Kommunikation zwischen dem Kommunikationscontroller und dem Eingabe/Ausgabe-Controller beispielsweise gemäß eines vorgegebenen Kommunikationsprotokolls, sowie über entsprechende Schnittstellen des Kommunikationscontrollers und des Eingabe/Ausgabe-Controllers, stattfinden.

In einer weiteren Ausführungsform sind die Feldgeräte ausgebildet, eine Datenkommunikation über den wenigstens einen Kommunikationsanschluss des ersten Gerätebereichs gemäß eines ersten Kommunikationsprotokolls durchzuführen. Die Feldgeräte sind weiter ausgebildet, eine Datenkommunikation über die Anschlusseinrichtung des zweiten Gerätebereichs gemäß eines zweiten und sich von dem ersten Kommunikationsprotokoll unterscheidenden zweiten Kommunikationsprotokolls durchzuführen. Hierdurch ist es möglich, die Datenkommunikation zwischen den Feldgeräten und hieran über Ausgangsleitungen angeschlossenen Feldkomponenten (Sensoren und/oder Aktoren) von der übrigen Datenkommunikation, also zwischen den Feldgeräten untereinander sowie zwischen den Feldgeräten und der übergeordneten Steuervorrichtung, was gegebenenfalls über das Einspeisegerät erfolgen kann, zu entkoppeln, und somit im Hinblick auf unterschiedliche Anforderungen auszugestalten. Es kann zum Beispiel vorgesehen sein, dass die Datenkommunikation zwischen den Feldgeräten und hieran angeschlossenen Feldkomponenten mit einer geringeren Datenübertragungsrate erfolgt als die übrige Datenkommunikation.

Die Datenkommunikation gemäß den unterschiedlichen Kommunikationsprotokollen kann über entsprechende Schnittstellen bzw. physikalische Schnittstellen und gegebenenfalls weitere interne Einrichtungen bzw. Komponenten erfolgen, welche in dem ersten und zweiten Gerätebereich der Feldgeräte angeordnet sein können. Derartige Bestandteile können dem Kommunikationscontroller des ersten Gerätebereichs und der Anschlusseinrichtung bzw. dem Eingabe/Ausgabe-Controller des zweiten Gerätebereichs zugeordnet bzw. hiervon umfasst sein.

Das erste Kommunikationsprotokoll kann sich zum Beispiel auf eine Ethernet-Kommunikation mit einer Datenübertragungsrate von beispielsweise 100MBit beziehen. Hierbei kann es sich zum Beispiel um EtherCAT handeln. Das zweite Kommunikationsprotokoll kann sich zum Beispiel auf eine Kommunikation gemäß HART oder Profibus PA beziehen. Es ist möglich, dass das zweite Kommunikationsprotokoll ebenfalls eine Ethernet-Kommunikation betrifft, wobei eine gegenüber dem ersten Kommunikationsprotokoll kleinere Datenübertragungsrate von beispielsweise 10MBit zur Anwendung kommt. Hierbei können für die Datenkommunikation verwendete interne Einrichtungen der Anschlusseinrichtung bzw. des Eingabe/Ausgabe-Controllers ferner zum Beispiel gemäß des zukünftigen APL-Standards (Advanced Physical Layer) ausgebildet sein.

In einer weiteren Ausführungsform ist zwischen dem Kommunikationscontroller und dem wenigstens einen Kommunikationsanschluss des ersten Gerätebereichs der Feldgeräte eine physikalische Schnittstelle angeordnet. Mit Hilfe der physikalischen Schnittstelle, welche auch als PHY bezeichnet werden kann und welche in Form eines physikalischen Schnittstellenbausteins verwirklicht sein kann, kann eine Verarbeitung in Form einer Kodierung bzw. Dekodierung von Datensignalen erfolgen. Zusätzlich oder alternativ ist zwischen dem Kommunikationscontroller und dem wenigstens einen Kommunikationsanschluss des ersten Gerätebereichs der Feldgeräte eine Barriereschaltung angeordnet, welche ausgebildet ist, eine Begrenzung einer zu dem Kommunikationsanschluss des ersten Gerätebereichs bei einer Datenkommunikation übertragbaren elektrischen Leistung und/oder eine galvanische Trennung hervorzurufen. Auf diese Weise kann, entsprechend der oben angegebenen Barriereinrichtung, eine hohe Sicherheit in Bezug auf die Datenkommunikation erzielt werden. Mit Hilfe der Barriereschaltung kann erzielt werden, dass aufgrund der Datenkommunikation kein Funke bzw. Zündfunke im Bereich des Kommunikationsanschlusses, und damit auch im Bereich einer hieran angeschlossenen Datenleitung, hervorgerufen werden kann. Die Barriereschaltung kann elektrische Bauelemente wie wenigstens eine Diode und wenigstens einen Widerstand zur Leistungslimitierung und/oder einen Übertrager oder eine Kapazität zur galvanischen Trennung aufweisen.

Bei einer Ausgestaltung eines Feldgeräts mit mehreren oder zwei Kommunikationsanschlüssen kann zwischen jedem der Kommunikationsanschlüsse und dem Kommunikationscontroller eine physikalische Schnittstelle und/oder eine Barrieschaltung angeordnet sein.

Sofern die Feldgeräte wie vorstehend beschrieben neben dem Weiterleiten bzw. Verteilen von elektrischer Energie zum Durchführen einer Datenkommunikation ausgebildet sind, können ferner folgende Ausgestaltungen zum Einsatz kommen, um den Verkabelungsaufwand möglichst gering zu halten.

In einer weiteren Ausführungsform ist der Eingangsanschluss des ersten Gerätebereichs der Feldgeräte in Form eines den wenigstens einen Kommunikationsanschluss umfassenden Hybridanschlusses ausgebildet, an welchem eine in Form einer Hybridleitung ausgebildete Versorgungsleitung angeschlossen werden kann. In dieser Ausgestaltung kann der Eingangsanschluss dazu genutzt werden, um elektrische Energie zur Energieversorgung einzuspeisen und Datensignale zu übertragen. In entsprechender Weise kann die an den Eingangsanschluss angeschlossene Versorgungsleitung gleichzeitig als Datenleitung fungieren, über welche elektrische Energie zur Energieversorgung und Datensignale übertragen werden können.

Wie oben angegeben wurde, kann der erste Gerätebereich wenigstens eines Feldgeräts des Systems wenigstens einen Ausgangsanschluss aufweisen. In einer weiteren Ausführungsform ist vorgesehen, dass der wenigstens eine Ausgangsanschluss in Form eines einen Kommunikationsanschluss umfassenden weiteren Hybridanschlusses ausgebildet ist, an welchem eine in Form einer Hybridleitung ausgebildete weitere Versorgungsleitung angeschlossen werden kann. In dieser Ausgestaltung kann der Ausgangsanschluss dazu genutzt werden, um elektrische Energie zur Energieversorgung weiterzuleiten und Datensignale zu übertragen. In entsprechender Weise kann die an den Ausgangsanschluss angeschlossene Versorgungsleitung gleichzeitig als Datenleitung fungieren, über welche elektrische Energie zur Energieversorgung und Datensignale übertragen werden können.

Die Ausgangsleitungsanschlüsse der Anschlusseinrichtungen der zweiten Gerätebereich der Feldgeräte können ebenfalls als Hybridanschlüsse ausgebildet sein, über welche elektrische Energie und Datensignale übertragen werden können. In entsprechender Weise können die hieran anschließbaren Ausgangsleitungen, welche zur Verbindung der Feldgeräte mit Feldkomponenten (Sensoren und/oder Aktoren) genutzt werden können, als Hybridleitungen zur Übertragung von elektrischer Energie und Datensignalen ausgeführt sein.

Mit Bezug auf das Einspeisegerät des Systems können ferner folgende Ausgestaltungen in Betracht kommen.

Das Einspeisegerät kann einen Stromversorgungseingang aufweisen, über welchen das Einspeisegerät mit einer Stromquelle bzw. Gleichstromquelle elektrisch verbunden sein kann, um auf diese Weise durch die Stromquelle elektrisch gespeist zu werden. Das Einspeisegerät kann ferner eine Einspeisegerät-Begrenzungseinrichtung aufweisen, welche ausgebildet ist, eine Begrenzung der dem Einspeisegerät über den Stromversorgungseingang zugeführten elektrischen Leistung hervorzurufen. Auf diese Weise kann gleichzeitig die durch das Einspeisegerät zur Energieversorgung der Feldgeräte bereitgestellte elektrische Leistung limitiert werden. Die Einspeisegerät-Begrenzungseinrichtung kann ausgebildet sein, eine Strombegrenzung und eine Spannungsbegrenzung zu bewirken.

Wie oben angedeutet wurde, kann das Einspeisegerät eine galvanische Trennung aufweisen. Die galvanische Trennung kann in der Einspeisegerät-Begrenzungseinrichtung ausgebildet sein.

In einer weiteren Ausführungsform weist die Überwachungseinrichtung des Einspeisegeräts einen ersten Detektor, einen zweiten Detektor, eine Einspeisegerät-Schalteinrichtung und eine Steuereinheit auf. Die Steuereinheit kann mit den beiden Detektoren und mit der Einspeisegerät-Schalteinrichtung verbunden sein. Der erste Detektor kann dazu ausgebildet sein, eine Stromänderung bei einem entstehenden Schließfunken (make-spark) zu erfassen. Ein solcher Funke kann bei einem Schließen bzw. Kurzschließen eines Stromkreises auftreten. Der zweite Detektor kann dazu ausgebildet sein, eine Stromänderung bei einem entstehenden Öffnungsfunken (break-spark) zu erfassen. Ein solcher Funke kann bei einem Öffnen bzw. Trennen eines Stromkreises auftreten. Im Betrieb kann mit Hilfe der Detektoren eine eine Funkenentstehung wiedergebende Stromänderung erfasst werden, und kann die Steuereinheit hierauf basierend durch entsprechendes Ansteuern der Einspeisegerät-Schalteinrichtung die elektrische Energieversorgung der Feldgeräte abschalten.

Das Einspeisegerät kann ferner einen Einspeisegerät-Ausgangsanschluss zum Anschlie-ßen einer Versorgungsleitung aufweisen. Über diese Versorgungsleitung kann das Einspeisegerät mit einem der Feldgeräte verbunden sein.

Hinsichtlich der Datenkommunikation kann das System wie oben beschrieben eine übergeordnete Steuervorrichtung aufweisen. In diesem Zusammenhang kann es in Betracht kommen, dass die übergeordnete Steuervorrichtung über das Einspeisegerät mit den Feldgeräten verbunden ist, um mit diesen zu kommunizieren bzw. Datensignale auszutauschen.

Das Einspeisegerät kann zu diesem Zweck zum Durchführen einer Datenkommunikation ausgebildet sein. Hierfür kann das Einspeisegerät einen Kommunikationseingang aufweisen, über welchen das Einspeisegerät mit der übergeordneten Steuervorrichtung verbunden sein kann, um Datensignale von der Steuervorrichtung zu empfangen und/oder an die Steuervorrichtung zu senden. Das Einspeisegerät kann ferner einen Einspeisegerät-Kommunikationscontroller, zwei physikalische Einspeisegerät-Schnittstellen zur Kodierung bzw. Dekodierung von Datensignalen, eine Einspeisegerät-Barriereschaltung und einen Einspeisegerät-Kommunikationsanschluss aufweisen. Über den Einspeisegerät-Kommunikationsanschluss und eine hieran angeschlossene Datenleitung kann das Einspeisegerät mit einem der Feldgeräte verbunden sein, um Datensignale zu dem Feldgerät zu senden und/oder von diesem zu empfangen. Eine erste der physikalischen Einspeisegerät-Schnittstellen kann zwischen dem Kommunikationseingang und dem Einspeisegerät-Kommunikationscontroller, und die zweite physikalische Einspeisegerät-Schnittstelle kann zwischen dem Einspeisegerät-Kommunikationsanschluss und dem Einspeisegerät-Kommunikationscontroller angeordnet sein. Die Einspeisegerät-Barriereschaltung kann zwischen dem Einspeisegerät-Kommunikationsanschluss und der zweiten physikalischen Einspeisegerät-Schnittstelle angeordnet sein. Die Einspeisegerät-Barriereschaltung kann ausgebildet sein, eine Begrenzung der bei einer Datenkommunikation übertragbaren elektrischen Leistung und/oder eine galvanische Trennung hervorzurufen.

Entsprechend den Feldgeräten kann der Einspeisegerät-Ausgangsanschluss in Form eines den Einspeisegerät-Kommunikationsanschluss umfassenden Hybridanschlusses ausgebildet sein, an welchem eine in Form einer Hybridleitung ausgebildete Versorgungsleitung angeschlossen werden kann. Auf diese Weise können elektrische Energie zur Energieversorgung und Datensignale über die Versorgungsleitung übertragen werden.

Als ein Beispiel, wird ein Feldgerät für ein System mit einem Einspeisegerät vorgeschlagen. Das Einspeisegerät ist ausgebildet, eine elektrische Energie zur elektrischen Energieversorgung des Feldgeräts bereitzustellen und eine Funkenentstehung bei der elektrischen Energieversorgung zu erfassen, um hierauf basierend die elektrische Energieversorgung abzuschalten. Das Feldgerät weist einen ersten Gerätebereich mit einem Eingangsanschluss zum Anschließen einer Versorgungsleitung und einen zweiten Gerätebereich auf. Die von dem Einspeisegerät bereitgestellte elektrische Energie kann über den Eingangsanschluss dem ersten Gerätebereich zugeführt und über eine elektrische Energieversorgungsverbindung von dem ersten zu dem zweiten Gerätebereich übertragen werden. Der zweite Gerätebereich weist eine Anschlusseinrichtung mit wenigstens einem Ausgangsleitungsanschluss zum Anschließen wenigstens einer Ausgangsleitung auf, um die zu dem zweiten Gerätebereich übertragene elektrische Energie weiterzuleiten. Die elektrische Energieversorgungsverbindung des ersten und zweiten Gerätebereichs weist eine Leistungsbegrenzungseinrichtung auf, welche ausgebildet ist, eine Begrenzung einer von dem ersten Gerätebereich zu dem zweiten Gerätebereich im Rahmen der Energieübertragung übertragbaren elektrischen Leistung hervorzurufen.

Für das vorgeschlagene Feldgerät können oben beschriebene Ausführungsformen, Merkmale und Details in entsprechender Weise zur Anwendung kommen. Bei einem Einsatz des Feldgeräts in einem System können in gleicher Weise oben erläuterte Vorteile erzielt werden. In diesem Sinne kann mit Hilfe des Einspeisegeräts des Systems unterdrückt werden, dass bei einem Fehlerfall ein Funke bzw. Zündfunke mit für eine Zündung ausreichender Energie im Bereich des Eingangsanschlusses des ersten Gerätebereichs des Feldgeräts sowie im Bereich einer an das Feldgeräte angeschlossenen Versorgungsleitung erzeugt wird. Durch die Leistungsbegrenzungseinrichtung des Feldgeräts und die dadurch erzielte Leistungslimitierung kann sichergestellt werden, dass bei einem Fehlerfall kein Funke bzw. Zündfunke im Bereich der Anschlusseinrichtung bzw. des wenigstens einen Ausgangsleitungsanschlusses des zweiten Gerätebereichs, und damit auch im Bereich wenigstens einer über eine Ausgangsleitung an die Anschlusseinrichtung des Feldgeräts angeschlossenen Feldkomponente (Sensor bzw. Aktor), auftreten kann.

Hinsichtlich des oben beschriebenen und mehrere Feldgeräte umfassenden Systems sowie hinsichtlich des vorgenannten Feldgeräts wird ferner auf Folgendes hingewiesen. Der oben erläuterte Aufbau der Feldgeräte mit einem ersten Gerätebereich und einem zweiten Gerätebereich kann auf einer schaltungstechnischen Betrachtungsweise der Feldgeräte beruhen. Aus Sicht des Explosionsschutzes kann für die Feldgeräte eine Ausgestaltung mit drei Bereichen zur Anwendung kommen. Diese Bereiche werden zur Unterscheidung im Folgenden mit der Formulierung "Geräteabschnitt", also mit erster Geräteabschnitt, zweiter Geräteabschnitt und dritter Geräteabschnitt bezeichnet. Der erste Geräteabschnitt umfasst den Eingangsanschluss und, sofern vorhanden, den wenigstens einen Ausgangsanschluss, und der zweite Geräteabschnitt umfasst den wenigstens einen Ausgangsleitungsanschluss eines Feldgeräts. Der dritte Geräteabschnitt, welcher sich jeweils auf das übrige Feldgerät bzw. übrige Bestandteile eines Feldgeräts bezieht, umfasst die mit den jeweiligen Anschlüssen verbundene(n) Schaltung bzw. Schaltungskomponenten.

Der erste Geräteabschnitt (Eingangsanschluss, Ausgangsanschluss) kann einer ersten Zündschutzart, der zweite Geräteabschnitt (Ausgangsleitungsanschluss) kann einer zweiten Zündschutzart, und der dritte Geräteabschnitt (übriges Feldgerät) kann einer dritten Zündschutzart entsprechen. Die erste, zweite und dritte Zündschutzart können sich voneinander unterscheiden. Entsprechend der obigen Beschreibung können die Feldgeräte bzw. deren Anschlüsse derart ausgebildet sein, dass die erste Zündschutzart die Zündschutzart Eigensicherheit Ex ib, und dass die zweite Zündschutzart die Zündschutzart Eigensicherheit Ex ia ist. Die Überwachungsfunktion des Einspeisegeräts kann ebenfalls zur Eigensicherheit Ex ib des ersten Geräteabschnitts, und die innerhalb der Feldgeräte erzielte Leistungslimitierung kann zur Eigensicherheit Ex ia des zweiten Geräteabschnitts beitragen. Mit Bezug auf die dritte Zündschutzart kann eine Ausgestaltung der Feldgeräte mit einer Vergusskapselung oder mit einer anderen äquivalenten Bauform wie beispielsweise einer druckfesten Kapselung in Betracht kommen, so dass die dritte Zündschutzart die Zündschutzart Ex mb oder Ex db sein kann.

Die vorstehend erläuterten und/oder in den Unteransprüchen wiedergegebenen vorteilhaften Aus- und Weiterbildungen der Erfindung können - außer zum Beispiel in Fällen eindeutiger Abhängigkeiten oder unvereinbarer Alternativen - einzeln oder aber auch in beliebiger Kombination miteinander zur Anwendung kommen.

Die oben beschriebenen Eigenschaften, Merkmale und Vorteile dieser Erfindung, sowie die Art und Weise, wie diese erreicht werden, werden klarer und deutlicher verständlich in Zusammenhang mit der folgenden Beschreibung von Ausführungsbeispielen, die im Zusammenhang mit den schematischen Zeichnungen näher erläutert werden. Es zeigen:
Figur 1 ein System umfassend ein Einspeisegerät, mehrere Feldgeräte und mehrere Feldkomponenten;
Figur 2 ein Anwendungsszenario des Systems, in welchem sich das Einspeisegerät, die Feldgeräte und die Feldkomponenten in unterschiedlichen Bereichen befinden;
Figur 3 eine Darstellung des Einspeisegeräts;
Figur 4 eine Darstellung eines Feldgeräts gemäß einer Ausgestaltung, in welcher das Feldgerät einen Eingangsanschluss und einen Ausgangsanschluss aufweist;
Figur 5 eine Entkopplungseinrichtung eines Feldgeräts;
Figur 6 einen Einschaltstrombegrenzer eines Feldgeräts;
Figur 7 eine Trenneinrichtung eines Feldgeräts;
Figuren 8 bis 11 unterschiedliche Ausgestaltungen einer Leistungsbegrenzungseinrichtung eines Feldgeräts;
Figur 12 eine Darstellung eines Feldgeräts gemäß einer weiteren Ausgestaltung, in welcher das Feldgerät einen Eingangsanschluss aufweist;
Figur 13 eine Darstellung eines Feldgeräts gemäß einer weiteren Ausgestaltung, in welcher das Feldgerät einen Eingangsanschluss und mehrere Ausgangsanschlüsse aufweist; und
Figur 14 eine weitere Darstellung eines Feldgeräts, welches aus Sicht des Explosionsschutzes drei Geräteabschnitte aufweist.

Auf der Grundlage der folgenden schematischen Figuren werden Ausgestaltungen eines Systems beschrieben, mit dessen Hilfe Feldkomponenten wie Aktoren und Sensoren energetisch versorgt sowie eine Kommunikation mit den Feldkomponenten bzw. eine Steuerung der Feldkomponenten vorgenommen werden kann. Die Feldkomponenten können sich dabei in einem explosionsgefährdeten Bereich befinden.

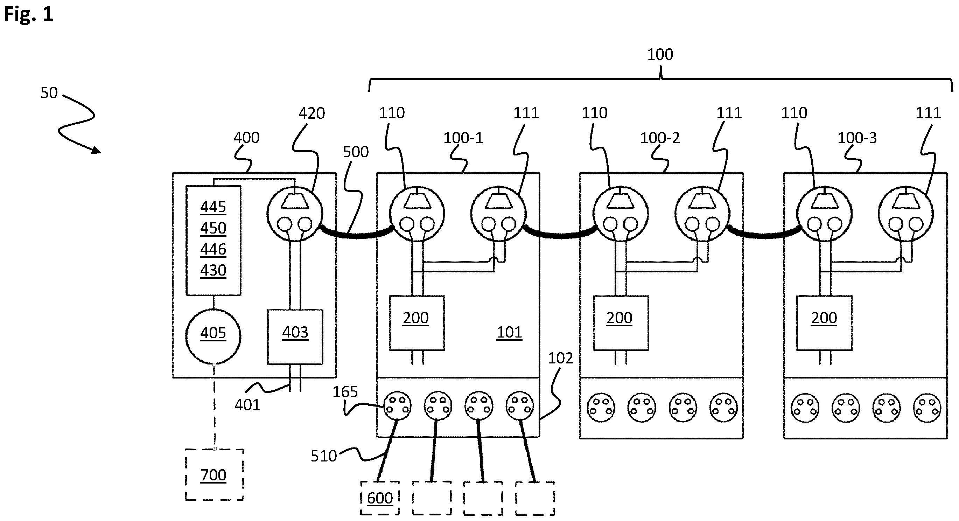

Zur weiteren Veranschaulichung zeigt Figur 1 eine schematische Darstellung eines Systems 50. Das System 50 umfasst ein Einspeisegerät 400, mehrere mit dem Einspeisegerät 400 elektrisch verbundene Feldgeräte 100, und mehrere mit den Feldgeräten 100 elektrisch verbundene Feldkomponenten 600. Hinsichtlich der Feldkomponenten 600 ist die Verbindung lediglich in Bezug auf eines der Feldgeräte 100 angedeutet. Das Einspeisegerät 400 ist u.a. dazu ausgebildet, eine elektrische Energie zur elektrischen Energieversorgung der Feldgeräte 100 und auch der Feldkomponenten 600 bereitzustellen. Bei der elektrischen Energie handelt es sich um einen elektrischen Gleichstrom.

Gemäß der in Figur 1 gezeigten Ausgestaltung umfasst das System 50 eine Reihe bzw. einen Strang aus drei Feldgeräten 100, welche zur Unterscheidung in Figur 1 mit den Bezugszeichen 100-1, 100-2, 100-3 versehen sind, und welche im Folgenden auch als erstes Feldgerät 100-1, zweites Feldgerät 100-2 und drittes Feldgerät 100-3 bezeichnet werden. Abgesehen hiervon kann das System 50 eine andere bzw. größere Anzahl an Feldgeräten 100 umfassen (nicht dargestellt).

Die elektrische Verbindung zwischen dem Einspeisegerät 400 und den Feldgeräten 100 bzw. zwischen den Feldgeräten 100 untereinander ist über Versorgungsleitungen 500 hergestellt. Wie in Figur 1 dargestellt ist, ist das Einspeisegerät 400 mit dem ersten Feldgerät 100-1 über eine Versorgungsleitung 500 verbunden. Über jeweils eine weitere Versorgungsleitung 500 ist das erste Feldgerät 100-1 mit dem zweiten Feldgerät 100-2, und ist das zweite Feldgerät 100-2 mit dem dritten Feldgerät 100-3 verbunden.

Die Versorgungsleitungen 500 sind an entsprechende Anschlüsse des Einspeisegeräts 400 und der Feldgeräte 100 angeschlossen. Das Einspeisegerät 400 weist einen Einspeisegerät-Ausgangsanschluss 420 auf, über welchen die von dem Einspeisegerät 400 bereitgestellte elektrische Energie ausgegeben werden kann. Die Feldgeräte 100 weisen einen Eingangsanschluss 110 und einen Ausgangsanschluss 111 auf. Der Eingangsanschluss 110 der Feldgeräte 100 dient zum Einspeisen von elektrischer Energie in die Feldgeräte 100, und der Ausgangsanschluss 111 zum Weiterleiten der eingebrachten elektrischen Energie bzw. eines Teils hiervon an ein weiteres Feldgerät 100.

Die das Einspeisegerät 400 mit dem ersten Feldgerät 100-1 verbindende Versorgungsleitung 500 ist an den Einspeisegerät-Ausgangsanschluss 420 des Einspeisegeräts 400 und an den Eingangsanschluss 110 des ersten Feldgeräts 100-1 angeschlossen. Mit Bezug auf die Verbindung zwischen dem ersten und zweiten Feldgerät 100-1, 100-2 sowie zwischen dem zweiten und dritten Feldgerät 100-2, 100-3 ist die jeweilige Versorgungsleitung 500 an den Ausgangsanschluss 111 des ersten Feldgeräts 100-1 und den Eingangsanschluss 110 des zweiten Feldgerät 100-2 bzw. an den Ausgangsanschluss 111 des zweiten Feldgeräts 100-2 und den Eingangsanschluss 110 des dritten Feldgeräts 100-3 angeschlossen. Die Versorgungsleitungen 500 können elektrische Leiter bzw. Adern für den Transport von elektrischer Energie und Steckverbinder mit entsprechenden Kontakten an deren Enden aufweisen (nicht dargestellt), mit deren Hilfe die Versorgungsleitungen 500 zum Anschließen an die jeweiligen Anschlüsse gesteckt werden können.

Die Feldgeräte 100 sind ferner ausgebildet, eine elektrische Verbindung mit den externen Feldkomponenten 600 des Systems 50 herzustellen, wie in Figur 1 lediglich mit Bezug auf das erste Feldgerät 100-1 veranschaulicht ist. Auf diese Weise können die Feldkomponenten 600 über die von dem Einspeisegerät 400 bereitgestellte und zu den Feldgeräten 100 übertragene elektrische Energie elektrisch versorgt werden. Bei den Feldkomponenten 600 kann es sich um Sensoren und/oder Aktoren des Systems 50 handeln.

Die Feldgeräte 100 weisen mehrere Ausgangsleitungsanschlüsse 165 zum Anschließen von Ausgangsleitungen 510 auf. Abgesehen von der in Figur 1 gezeigten Ausgestaltung mit vier Ausgangsleitungsanschlüssen 165 je Feldgerät 100 können die Feldgeräte 100 mit einer anderen bzw. größeren Anzahl an Ausgangsleitungsanschlüssen 165 ausgebildet sein (nicht dargestellt). Über eine Ausgangsleitung 510 kann eine Feldkomponente 600 mit einem Feldgerät 100 verbunden sein. Entsprechend den Versorgungsleitungen 500 können die Ausgangsleitungen 510 Adern und Steckverbinder mit entsprechenden Kontakten an deren Enden aufweisen (nicht dargestellt), mit deren Hilfe die Ausgangsleitungen 510 zum Anschließen an die Ausgangsleitungsanschlüsse 165 der Feldgeräte 100 und entsprechende Anschlüsse der Feldkomponenten 600 gesteckt werden können.

Die von dem Einspeisegerät 400 bereitgestellte elektrische Energie kann über die das Einspeisegerät 400 mit dem ersten Feldgerät 100-1 verbindende Versorgungsleitung 500 in das erste Einspeisegerät 100-1 eingebracht werden. Hiervon ausgehend kann die elektrische Energie von dem ersten Feldgerät 100-1 zu dem zweiten Feldgerät 100-2, und ausgehend von diesem zu dem dritten Feldgerät 100-3 über die die jeweiligen Feldgeräte 100 verbindenden Versorgungsleitungen 500 weitergeleitet werden. Die in die einzelnen Feldgeräte 100 eingebrachte elektrische Energie kann ferner über die an die Feldgeräte 100 angeschlossenen Ausgangsleitungen 510 an die Feldkomponenten 600 weitergeleitet bzw. weiterverteilt werden. Die Feldgeräte 100 können dabei als Energieverteiler für die Feldkomponenten 600 dienen.

Das System 50 weist zusätzlich zu dem Einspeisegerät 400, den Feldgeräten 100 und den Feldkomponenten 600 eine übergeordnete und zur Steuerung des Systems 50 eingesetzte Steuervorrichtung 700 auf. Die Steuervorrichtung 700 dient u.a. zur Steuerung von Aktoren unter Verwendung von Steuerdaten bzw. Steuersignalen, was u.a. auf der Grundlage von Sensordaten bzw. Sensorsignalen von Sensoren durchgeführt wird. Das System 50 ist dementsprechend zum Durchführen einer Datenkommunikation ausgebildet, um einen Datenaustausch u.a. zwischen der Steuervorrichtung 700 und den Feldkomponenten 600 zu ermöglichen. Eine Datenkommunikation kann dabei zwischen den Feldgeräten 100 und den hieran angeschlossenen Feldkomponenten 600, zwischen den Feldgeräten 100 untereinander, zwischen dem ersten Feldgerät 100-1 und dem Einspeisegerät 400, sowie zwischen der Steuervorrichtung 700 und dem Einspeisegerät 400 erfolgen. In diesem Sinne kann das Einspeisegerät 400 als Kommunikationsvermittler zwischen der Steuervorrichtung 700 und den Feldgeräten 100 dienen, und können die Feldgeräte 100 ihrerseits als Kommunikationsvermittler zwischen dem Einspeisegerät 400 und den Feldkomponenten 600 dienen.

Um den Verkabelungsaufwand gering zu halten, findet die Datenkommunikation zwischen dem Einspeisegerät 400 und den Feldgeräten 100 bzw. zwischen dem Einspeisegerät 400 und dem ersten Feldgerät 100-1 sowie zwischen den Feldgeräten 100 untereinander, als auch die Datenkommunikation zwischen den Feldgeräten 100 und den Feldkomponenten 600, über die gleichen Schnittstellen und Leitungen statt, wie sie auch zur elektrischen Energieversorgung genutzt werden. Insofern dienen der Einspeisegerät-Ausgangsanschluss 420 des Einspeisegeräts 400 und die Eingangsanschlüsse 110, Ausgangsanschlüsse 111 und Ausgangsleitungsanschlüsse 165 der Feldgeräte 100 als Hybridanschlüsse, über welche sowohl elektrische Energie zur Energieversorgung als auch Datensignale übertragen werden können. In entsprechender Weise dienen die Versorgungsleitungen 500 und Ausgangsleitungen 510 als Hybridleitungen zur Übertragung von elektrischer Energie und von Datensignalen. Weitere Details hierzu werden weiter unten noch näher erläutert.

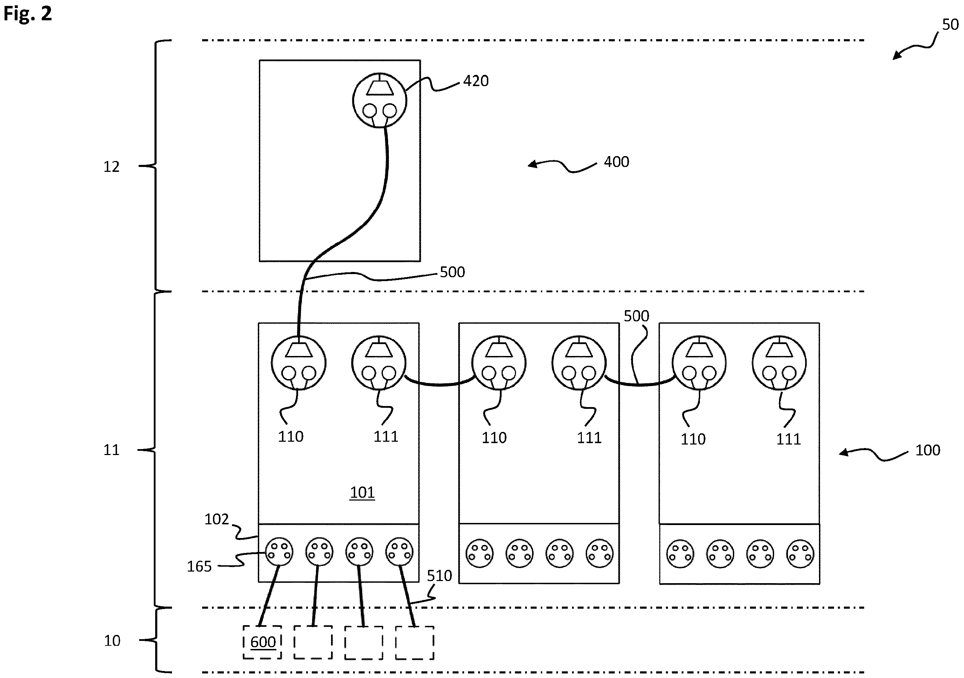

Figur 2 veranschaulicht ein mögliches Anwendungsszenario, welches für das System 50 in Betracht kommen kann. Hierbei befinden sich die mit den Feldgeräten 100 verbundenen Feldkomponenten 600 in einem ersten Bereich 10. Der erste Bereich 10 ist ein explosionsgefährdeter Bereich. In dem ersten Bereich 10 kann eine gefährliche explosionsfähige Atmosphäre als Gemisch aus Luft und brennbaren Gasen, Dämpfen, Nebeln oder Stäuben ständig, über lange Zeiträume oder häufig vorhanden sein. Der erste Bereich 10 kann zum Beispiel eine Zone 0/20 gemäß der ATEX-Richtlinie sein. Die Feldgeräte 100 sind in einem zweiten Bereich 11 angeordnet. Der zweite Bereich 11 ist im Unterschied zu dem ersten Bereich 10 ein weniger explosionsgefährdeter Bereich. In dem zweiten Bereich 11 kann sich gelegentlich eine gefährliche explosionsfähige Atmosphäre als Gemisch aus Luft und brennbaren Gasen, Dämpfen, Nebeln oder Stäuben bilden. Der zweite Bereich 11 kann zum Beispiel eine Zone 1/21 gemäß der ATEX-Richtlinie sein. Das Einspeisegerät 400 befindet sich in einem dritten Bereich 12. Der dritte Bereich 12 ist im Unterschied zu den anderen Bereichen 10, 11 ein nicht oder nur wenig explosionsgefährdeter Bereich. In dem dritten Bereich 12 kann eine gefährliche explosionsfähige Atmosphäre als Gemisch aus Luft und brennbaren Gasen, Dämpfen, Nebeln oder Stäuben nicht, oder nur selten und für kurze Zeit auftreten. Der dritte Bereich 12 kann zum Beispiel eine Zone 2/22 gemäß der ATEX-Richtlinie sein.

Das in Figur 2 gezeigte Anwendungsszenario kann ermöglicht werden, indem einerseits eine Überwachung der elektrischen Energieversorgung der Feldgeräte 100 durchgeführt wird, um im Fehlerfall einen entstehenden Funken durch schnelles Abschalten der Energieversorgung zu löschen, und andererseits eine leistungslimitierende Ausgestaltung der Feldgeräte 100 vorgesehen ist. Das Einspeisegerät 400 und die Feldgeräte 100 können in diesem Zusammenhang wie im Folgenden beschrieben ausgestaltet sein.

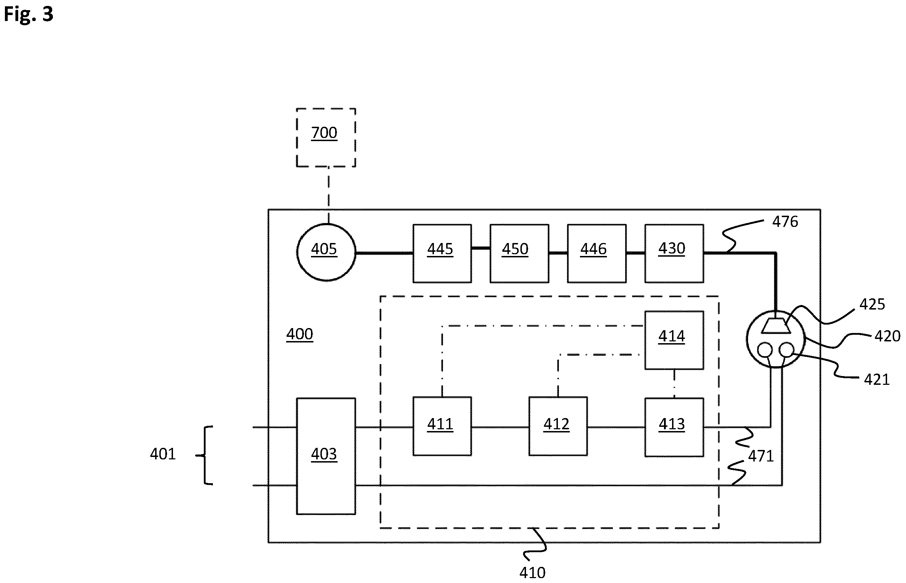

Figur 3 zeigt eine Darstellung des Einspeisegeräts 400 des Systems 50 gemäß einer möglichen Ausgestaltung. Das Einspeisegerät 400 weist mit Bezug auf die Bereitstellung von elektrischer Energie einen Stromversorgungseingang 401 auf, über welchen das Einspeisegerät 400 mit einer nicht dargestellten Stromquelle bzw. Gleichstromquelle elektrisch verbunden sein, und auf diese Weise durch die Stromquelle elektrisch gespeist werden kann. Ein weiterer Bestandteil ist eine Einspeisegerät-Begrenzungseinrichtung 403. Die Einspeisegerät-Begrenzungseinrichtung 403 ist ausgebildet, eine Begrenzung der dem Einspeisegerät 400 über den Stromversorgungseingang 401 zugeführten elektrischen Leistung hervorzurufen, bevor diese im Rahmen der elektrischen Energieversorgung über den Einspeisegerät-Ausgangsanschluss 420 an die Feldgeräte 100 (bzw. gemäß der Darstellung von Figur 1 an das erste Feldgerät 100-1 und über dieses an die weiteren Feldgeräte 100) weitergegeben wird. Mit Hilfe der Einspeisegerät-Begrenzungseinrichtung 403 kann eine Strombegrenzung und eine Spannungsbegrenzung bewirkt werden. Darüber hinaus kann das Einspeisegerät 400 eine galvanische Trennung aufweisen, welche in der Einspeisegerät-Begrenzungseinrichtung 403 ausgebildet sein kann.

Das Einspeisegerät 400 weist ferner eine Überwachungseinrichtung 410 auf, welche ausgebildet ist, eine Funkenentstehung bei der elektrischen Energieversorgung der Feldgeräte 100 infolge eines Fehlers zu erfassen und hierauf basierend die elektrische Energieversorgung abzuschalten. Das Erfassen und Abschalten erfolgen dabei mit einer niedrigen Latenz, um zu verhindern, dass ein Funke bzw. Zündfunke mit relevanter bzw. mit für eine Zündung ausreichender Energie erzeugt werden kann.

Die Überwachungseinrichtung 410 weist, wie in Figur 3 dargestellt ist, einen ersten Detektor 411, einen zweiten Detektor 412, eine Einspeisegerät-Schalteinrichtung 413 und eine mit den beiden Detektoren 411, 412 und der Einspeisegerät-Schalteinrichtung 413 verbundene Steuereinheit 414 auf. Der erste Detektor 411 kann dazu ausgebildet sein, eine Stromänderung bei einem entstehenden Schließfunken (make-spark) zu erfassen. Ein solcher Funke kann durch ein Schließen bzw. Kurzschließen eines elektrischen Stromkreises hervorgerufen werden. Die Stromänderung, welche hierbei auftritt, kann ein Anstieg des elektrischen Stroms über die Zeit (d.h. +di/dt) sein. Der zweite Detektor 412 kann dazu ausgebildet sein, eine Stromänderung bei einem entstehenden Öffnungsfunken (break-spark) zu erfassen. Ein solcher Funke kann durch ein Öffnen bzw. Trennen eines elektrischen Stromkreises erzeugt werden. Die dabei auftretende Stromänderung kann eine Reduzierung des elektrischen Stroms über die Zeit (d.h. -di/dt) sein.

Im Betrieb der Überwachungseinrichtung 410 können mit Hilfe des ersten und zweiten Detektors 411, 412 eine für eine Funkenentstehung charakteristische Stromänderung und damit die Funkenentstehung erfasst werden. Die Steuereinheit 414 kann hierauf basierend durch entsprechendes Ansteuern der Einspeisegerät-Schalteinrichtung 413 die elektrische Energieversorgung der Feldgeräte 100 abschalten. Dies ist mit einem Erlöschen des Funkens und infolgedessen mit einer Funkendauerlimitierung verbunden.

In Figur 3 sind interne elektrische Leiter 471 des Einspeisegeräts 400 angedeutet, über welche die elektrische Energie innerhalb des Einspeisegeräts 400 transportiert werden kann, und über welche Bestandteile des Einspeisegeräts 400, einschließlich des Einspeisegerät-Ausgangsanschlusses 420, miteinander verbunden sind. Mit Bezug auf den Einspeisegerät-Ausgangsanschluss 420 sind zwei interne Leiter 471 zu zwei Anschlusskontakten 421 des Einspeisegerät-Ausgangsanschlusses 420 geführt und mit diesen verbunden. Die Anschlusskontakte 421 können von Kontakten eines Steckverbinders einer zum Anschließen an den Einspeisegerät-Ausgangsanschluss 420 vorgesehenen Versorgungsleitung 500 (vgl. Figur 1) kontaktiert werden (nicht dargestellt), wodurch die von dem Einspeisegerät 400 bereitgestellte elektrische Energie über die betreffende Versorgungsleitung 500 weitergeleitet werden kann.

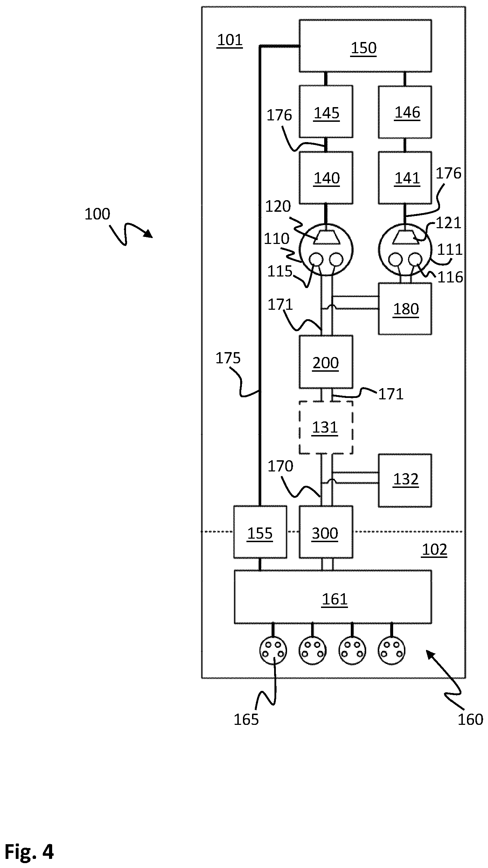

Figur 4 zeigt eine Darstellung eines Feldgeräts 100 des Systems 50 gemäß einer möglichen ersten Ausgestaltung. Diese Darstellung, sowie auch die nachfolgende Beschreibung, können auf sämtliche Feldgeräte 100 des Systems 50 zur Anwendung kommen. Das Feldgerät 100 weist einen ersten Gerätebereich 101 und einen zweiten Gerätebereich 102 auf. Der erste Gerätebereich 101 weist die oben beschriebenen und zum Anschließen von Versorgungsleitungen 500 eingesetzten Anschlüsse, d.h. den Eingangsanschluss 110 und den Ausgangsanschluss 111 auf. Über den Eingangsanschluss 110 kann die mit Hilfe des Einspeisegeräts 400 bereitgestellte elektrische Energie in den ersten Gerätebereich 101 des Feldgeräts 100 eingebracht werden. Über den Ausgangsanschluss 111 kann die elektrische Energie ausgegeben und an ein weiteres Feldgerät 100 übertragen werden. In Figur 4 sind ferner interne elektrische Leiter 171 des Feldgeräts 100 angedeutet, über welche die elektrische Energie innerhalb des Feldgeräts 100 transportiert bzw. weitergeleitet werden kann, und über welche Bestandteile des Feldgeräts 100 wie der Eingangsanschluss 110 und der Ausgangsanschluss 111 miteinander verbunden sind. Die internen Leiter 171 können in Form von Leiterbahnen vorliegen.

Der Eingangsanschluss 110 weist zwei Anschlusskontakte 115 auf, welche mit zwei internen elektrischen Leitern 171 verbunden sind. Auch der Ausgangsanschluss 111 weist zwei Anschlusskontakte 116 auf, welche mit zwei internen elektrischen Leitern 171 verbunden sind. Die Anschlusskontakte 115, 116 des Eingangsanschlusses 110 und des Ausgangsanschlusses 111, welche im Rahmen der elektrischen Energieversorgung genutzt werden, können jeweils von Kontakten von Steckverbindern von zum Anschließen an den Eingangsanschluss 110 und den Ausgangsanschluss 111 genutzten Versorgungsleitungen 500 (vgl. Figur 1) kontaktiert werden (nicht dargestellt), wodurch die elektrische Energie über die jeweilige Versorgungsleitung 500 eingespeist bzw. weitergeleitet werden kann.

Der zweite Gerätebereich 102 weist, wie in Figur 4 gezeigt ist, eine Anschlusseinrichtung 160 auf, welche die zum Anschließen von Ausgangsleitungen 510 verwendeten Ausgangsleitungsanschlüsse 165 umfasst. Über die Ausgangsleitungsanschlüsse 165 und hieran angeschlossene Ausgangsleitungen 510 kann das Feldgerät 100 mit Feldkomponenten 600 verbunden sein (vgl. die Figuren 1, 2). Die Anschlusseinrichtung 160 umfasst des Weiteren einen mit den Ausgangsleitungsanschlüssen 165 verbundenen Eingabe/Ausgabe-Controller 161, welcher wie weiter unten beschrieben im Rahmen der Datenkommunikation zum Einsatz kommen kann. Der erste Gerätebereich 101 und der zweite Gerätebereich 102 sind über eine elektrische Energieversorgungverbindung 170 verbunden, über welche die über den Eingangsanschluss 110 in den ersten Gerätebereich 101 eingespeiste elektrische Energie zu dem zweiten Gerätebereich 102, und damit zu der Anschlusseinrichtung 160 mit den Ausgangsleitungsanschlüssen 165, übertragen werden kann. Die in den zweiten Gerätebereich 102 eingebrachte elektrische Energie kann dabei, wie in Figur 4 angedeutet, über den Eingabe/Ausgabe-Controller 161 bzw. durch den Eingabe/Ausgabe-Controller 161 hindurch, oder auch an dem Eingabe/Ausgabe-Controller 161 vorbei bzw. parallel zu dem Eingabe/Ausgabe-Controller 161 (nicht dargestellt), zu den Ausgangsleitungsanschlüssen 165 geleitet werden. Hiervon ausgehend kann die elektrische Energie zu den Feldkomponenten 600 weitergeleitet werden.

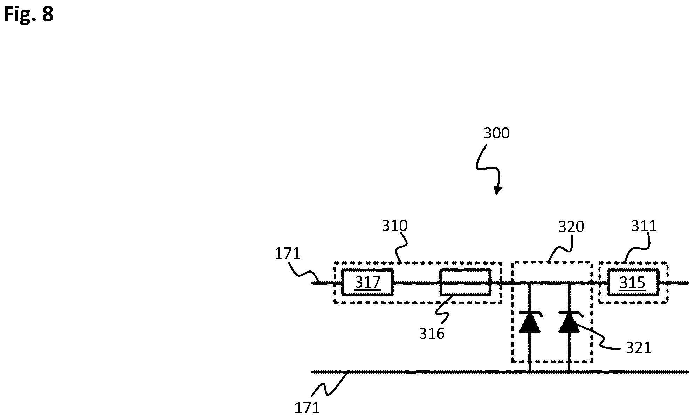

Die elektrische Energieversorgungverbindung 170 des Feldgeräts 100 umfasst, wie in Figur 4 gezeigt ist, neben internen elektrischen Leitern 171, eine Leistungsbegrenzungseinrichtung 300. Die Leistungsbegrenzungseinrichtung 300, welche sich zwischen dem Eingangsanschluss 110 und der Anschlusseinrichtung 160 bzw. dem Eingabe/Ausgabe-Controller 161 befindet, ist ausgebildet, eine Begrenzung der von dem ersten Gerätebereich 101 zu dem zweiten Gerätebereich 102 im Rahmen der Energieübertragung maximal übertragbaren elektrischen Leistung hervorzurufen. Mit Hilfe der Leistungsbegrenzungseinrichtung 300 kann eine Strombegrenzung und eine Spannungsbegrenzung hervorgerufen werden. Die Leistungsbegrenzung ist derart ausgestaltet, dass die unter Berücksichtigung aller nachgeordneten Energiespeicher (nicht gezeigt) zur Verfügung stehende elektrische Energie nicht ausreicht, um im Fehlerfall einen Funken bzw. Zündfunken zu erzeugen. Mögliche Ausgestaltungen der Leistungsbegrenzungseinrichtung 300 werden weiter unten anhand der Figuren 8 bis 11 näher erläutert.

Bei dem System 50 kommen, im Hinblick auf die elektrische Energieversorgung, somit unterschiedliche und jeweils eine hohe Sicherheit ermöglichende Schutzmechanismen zum Einsatz, wodurch das in Figur 2 gezeigte Anwendungsszenario möglich ist. Mit Hilfe der Überwachungseinrichtung 410 des Einspeisegeräts 400 kann ein bei der elektrischen Energieversorgung der Feldgeräte 100 aufgrund eines Fehlers auftretender Funke im Bereich der Eingangsanschlüsse 110 und Ausgangsanschlüsse 111 der ersten Gerätebereiche 101 der Feldgeräte 100 und im Bereich der hieran angeschlossen Versorgungsleitungen 500 in dessen Entstehung zuverlässig erfasst, und kann hierauf basierend mit einer niedrigen Latenz die elektrische Energieversorgung abgeschaltet werden, um den Funken zu löschen. Wie oben beschrieben wurde, verhindert die dadurch erzielte Funkendauerbegrenzung die Erzeugung eines Funkens bzw. Zündfunkens mit für eine Zündung ausreichender Energie im Bereich der Eingangsanschlüsse 110, Ausgangsanschlüsse 111 und Versorgungsleitungen 500. Auf diese Weise können die Feldgeräte 100 in Zone 1/21 gemäß der ATEX-Richtlinie (zweiter Bereich 11 gemäß Figur 2) angeordnet sein.

Hinsichtlich der zweiten Gerätebereiche 102 der Feldgeräte 100 wird mit Hilfe der Leistungsbegrenzungseinrichtung 300 eine Begrenzung der von dem ersten Gerätebereich 101 zu dem zweiten Gerätebereich 102 maximal übertragbaren elektrischen Leistung hervorgerufen. Hierdurch kann mit einer hohen Zuverlässigkeit sichergestellt werden, dass die zur Verfügung stehende elektrische Energie derart limitiert ist, dass bei einem Fehlerfall kein Funke bzw. Zündfunke mit für eine Zündung ausreichender Energie im Bereich der Anschlusseinrichtungen 160 bzw. Ausgangsleitungsanschlüsse 165 der zweiten Gerätebereiche 102 der Feldgeräte 100, der Ausgangsleitungen 510 und der über die Ausgangsleitungen 510 an die Feldgeräte 100 angeschlossenen Feldkomponenten 600 erzeugt werden kann. Infolgedessen können die Feldkomponenten 600 in Zone 0/20 gemäß der ATEX-Richtlinie (erster Bereich 10 gemäß Figur 2) angeordnet sein.

Aufgrund der Überwachung der elektrischen Energieversorgung der Feldgeräte 100 und der Leistungslimitierung innerhalb der Feldgeräte 100 ist es ferner möglich, einfache und kostengünstige Bauformen für die Versorgungsleitungen 500 und Ausgangsleitungen 510, und für die an den Leitungen 500, 510 angeordneten Steckverbinder, vorzusehen. Auch besteht die Möglichkeit, eine relativ große elektrische Leistung in die ersten Gerätebereiche 101 der Feldgeräte 100 einzubringen.

Anhand des in Figur 4 gezeigten Feldgeräts 100 werden weitere Merkmale und Details deutlich, welche für die Feldgeräte 100 des Systems 50 in Betracht kommen können. Gemäß der in Figur 4 gezeigten Ausgestaltung weist der erste Gerätebereich 101 eine Schalteinrichtung 180 auf. Über die Schalteinrichtung 180 und interne elektrische Leiter 171 sind der zum Einbringen von elektrischer Energie in den ersten Gerätebereich 101 eingesetzte Eingangsanschluss 110 und der zum Ausbringen bzw. Weiterleiten der elektrischen Energie genutzte Ausgangsanschluss 111 miteinander verbunden. Mit Hilfe der Schalteinrichtung 180 kann das Weiterleiten der elektrischen Energie geschaltet werden. In dieser Ausgestaltung kann durch entsprechendes Ansteuern der zwischen dem Eingangsanschluss 110 und dem Ausgangsanschluss 111 angeordneten Schalteinrichtung 180 ein Trennen und ein Verbinden des Eingangsanschlusses 110 und des Ausgangsanschlusses 111 hervorgerufen werden, wodurch das Weiterleiten der elektrischen Energie über den Ausgangsanschluss 111 flexibel gesteuert werden kann.

Der erste Gerätebereich 101 des in Figur 4 abgebildeten Feldgeräts 100 weist ferner eine Entkopplungseinrichtung 200 auf, welche zwischen dem Eingangsanschluss 110 und der Leistungsbegrenzungseinrichtung 300 angeordnet ist. Die Entkopplungseinrichtung 200 ist ausgebildet, eine vorgegebene Eingangsimpedanz des Feldgeräts 100 mit Bezug auf das Erfassen der Funkenentstehung bereitzustellen. Hierdurch kann das Feldgerät 100 ein bekanntes und vorhersagbares elektrisches Verhalten besitzen, wodurch eine Funkenentstehung im Fehlerfall mit einer hohen Zuverlässigkeit und Genauigkeit durch das Einspeisegerät 400 erfasst werden kann.

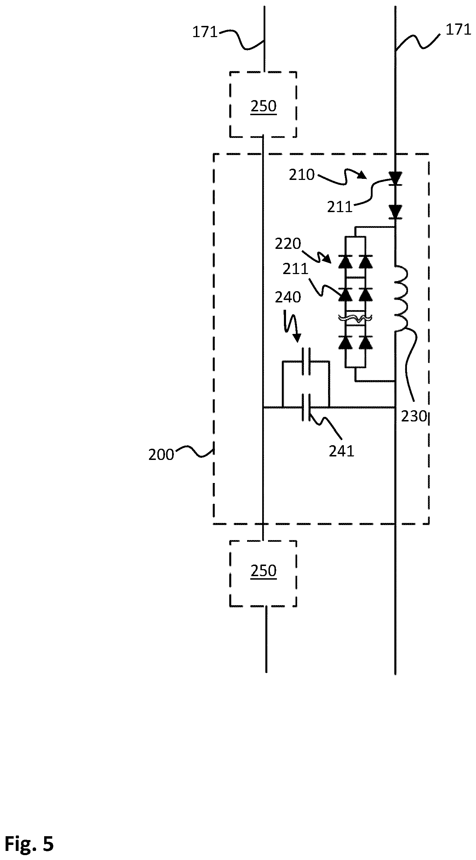

Figur 5 zeigt eine mögliche Ausgestaltung der Entkopplungseinrichtung 200. Die Entkopplungseinrichtung 200 umfasst einen LC-Tiefpass mit einer Induktivität 230 und einer kapazitive Baugruppe 240, welche parallel zu einem Ende der Induktivität 230 geschaltet ist, und über welche ein die Induktivität 230 umfassender Leitungspfad mit einem weiteren Leitungspfad verbunden ist. An einem hierzu entgegengesetzten Ende der Induktivität 230 befindet sich eine in Reihe zu der Induktivität 230 geschaltete weitere Baugruppe 210. Die weitere Baugruppe 210 umfasst gemäß der in Figur 5 gezeigten Ausgestaltung zwei seriell verbundene Dioden 211, und kann daher auch als Dioden-Baugruppe bezeichnet werden. Ein weiterer Bestandteil der Entkopplungseinrichtung 200 ist eine parallel zu der Induktivität 230 geschaltete Spannungsbegrenzungseinrichtung, welche gemäß der in Figur 5 gezeigten Ausgestaltung in Form einer Klemmschaltung 220 aus zwei Strängen aus seriell verbundenen Dioden 211 verwirklicht ist, wobei die Stränge und die Dioden 211 zueinander parallel geschaltet sind. Die kapazitive Baugruppe 240 weist zwei zueinander parallel geschaltete Kapazitäten 241 auf.

Die vorgegebene Eingangsimpedanz wird durch die Induktivität 230 und die kapazitive Baugruppe 240 der Entkopplungseinrichtung 200 vorgegeben. Die weitere Baugruppe 210 dient dazu, eine Stromflussrichtung vorzugeben. Die Spannungsbegrenzungseinrichtung bzw. Klemmschaltung 220 dient dazu, einen maximalen Spannungsabfall über die Induktivität 230 vorzugeben und im Falle einer Spannungsüberschreitung, beispielsweise aufgrund einer Unterbrechung eines internen elektrischen Leiters 171 an einem Ende der Induktivität 230, die überschüssige Spannung in Wärme umzusetzen.

Figur 5 veranschaulicht des Weiteren die Möglichkeit, für das in Figur 4 gezeigte Feldgerät 100 (und damit sämtliche Feldgeräte 100 des Systems 50) einen Einschaltstrombegrenzer 250 in dem ersten Gerätebereich 101 vorzusehen. Der Einschaltstrombegrenzer 250 kann zwischen der Entkopplungseinrichtung 200 und dem Eingangsanschluss 110 angeordnet sein, wie in Figur 5 anhand einer Position oberhalb bzw. eingangsseitig der Entkopplungseinrichtung 200 angedeutet ist. Alternativ dazu kann der Einschaltstrombegrenzer 250 zwischen der Entkopplungseinrichtung 200 und der Leistungsbegrenzungseinrichtung 300 angeordnet sein, wie in Figur 5 anhand einer Position unterhalb bzw. ausgangsseitig der Entkopplungseinrichtung 200 angedeutet ist.

Der Einschaltstrombegrenzer 250 ist ausgebildet, einen Einschaltstrom bei einem Beginn der elektrischen Energieversorgung zu begrenzen. Auf diese Weise kann vermieden werden, dass zu Beginn der elektrischen Energieversorgung ein hoher bzw. überhöhter Einschaltstrom bei einem oder mehreren Feldgeräten 100 auftritt mit der Folge, dass das zur Überwachung verwendete Einspeisegerät 400 die Energieversorgung fälschlicherweise abschaltet, obwohl keine Funkenentstehung vorliegt. Mit Hilfe des Einschaltstrombegrenzers 250 kann zum Beispiel ein langsames Laden von gegebenenfalls vorhandenen lokalen Kapazitäten (nicht dargestellt) erzielt werden.

Bei einer Anordnung des Einschaltstrombegrenzers 250 zwischen der Entkopplungseinrichtung 200 und dem Eingangsanschluss 110 (obere Position in Figur 5) kann der Einschaltstrombegrenzer 250 sicherheitstechnischen Anforderungen unterliegen, zum Beispiel im Hinblick auf ein Bereitstellen einer Redundanz. Demgegenüber können bei einer Anordnung des Einschaltstrombegrenzers 250 zwischen der Entkopplungseinrichtung 200 und der Leistungsbegrenzungseinrichtung 300 (untere Position in Figur 5) weniger strenge Anforderungen in Bezug auf den Einschaltstrombegrenzer 250 vorliegen, welcher dadurch gemäß einer einfachen Ausgestaltung verwirklicht sein kann.

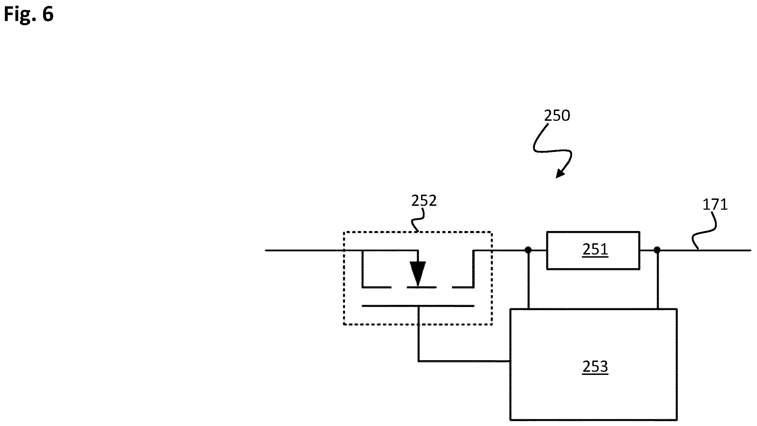

Figur 6 zeigt eine mögliche Auslegung des Einschaltstrombegrenzers 250. Der Einschaltstrombegrenzer 250 weist einen Widerstand 251 und einen Transistor 252 auf, welche zueinander in Reihe geschaltet sind. Der Transistor 252 kann ein selbstsperrender n-Kanal FET (Feldeffekttransistor) sein. Ein weiterer Bestandteil des Einschaltstrombegrenzers 250 ist ein Regler 253. Der Regler 253 ist ausgebildet, den über den Widerstand 251 fließenden Strom zu messen und hiervon abhängig, durch entsprechendes Ansteuern des Gates des Transistors 252, den Spannungsabfall über den Transistor 252 derart zu regeln, dass ein Auftreten eines überhöhten Stroms vermieden wird.

Für die Feldgeräte 100 des Systems 50 kann ferner eine Bauform mit einer galvanischen Trennung in Betracht kommen. Zur Veranschaulichung ist in Figur 4 eine mögliche Ausgestaltung des ersten Gerätebereichs 101 des Feldgeräts 100 mit einer Trenneinrichtung 131 angedeutet, welche zwischen der Entkopplungseinrichtung 200 und der Leistungsbegrenzungseinrichtung 300 angeordnet ist, und durch welche eine galvanische Trennung bewirkt werden kann. Auf diese Weise kann die in den ersten Gerätebereich 101 eingespeiste elektrische Energie auf getrennten elektrischen Stromkreisen geführt werden, wodurch ein zuverlässiger und sicherer Betrieb des Systems 50 begünstigt werden kann.

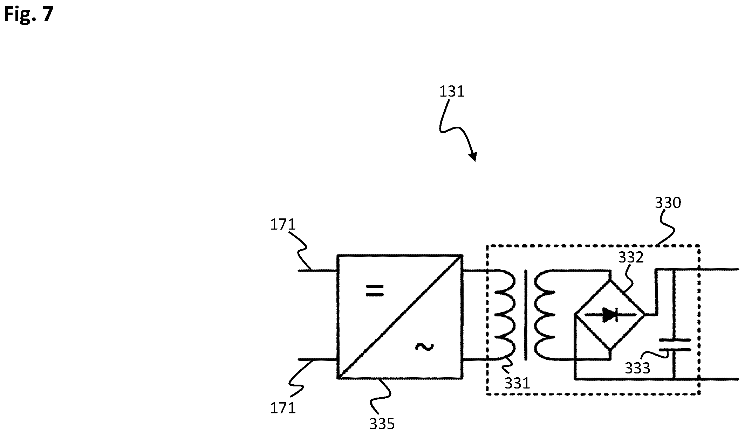

Figur 7 zeigt eine mögliche Ausgestaltung der Trenneinrichtung 131. Die Trenneinrichtung 131 weist einen eingangsseitig angeordneten Wechselrichter 335 und eine dem Wechselrichter 335 nachgeordnete Trennungs-Baugruppe 330 auf, welche einen die galvanische Trennung bewirkenden Übertrager 331 und, diesem nachgeordnet, einen Gleichrichter 332 und einen parallel zu dem Gleichrichter 332 geschalteten Glättungskondensator 333 umfasst. Mit Hilfe des Wechselrichters 335 kann die als Gleichstrom vorliegende elektrische Energie in einen Wechselstrom umgewandelt und dem Übertrager 331 zugeführt werden. Der von dem Übertrager 331 ausgegebene Wechselstrom kann mit Hilfe des Gleichrichters 332 und des Glättungskondensators 333 gleichgerichtet und geglättet werden, so dass ausgangsseitig der Trenneinrichtung 131 wieder ein Gleichstrom vorliegt.

Wie oben angedeutet wurde, kann eine galvanische Trennung auch in dem Einspeisegerät 400 ausgebildet sein, zum Beispiel in der Einspeisegerät-Begrenzungseinrichtung 403 (vgl. Figur 3). Auf diese Weise können die Feldgeräte 100 auch ohne galvanische Trennung und dadurch ohne die Trenneinrichtung 131 verwirklicht sein. Für den Fall einer Ausgestaltung des Einspeisegeräts 400 mit einer galvanischen Trennung kann diese entsprechend des in Figur 7 gezeigten Schaltbildes verwirklicht sein.

Das in Figur 4 gezeigte Feldgerät 100 bzw. dessen erster Gerätebereich 101 weist des Weiteren ein internes Netzteil 132 auf, welches über die dem ersten Gerätebereich 101 zugeführte elektrische Energie elektrisch versorgt werden kann. Eine zu dem internen Netzteil 132 führende und durch interne elektrische Leiter 171 gebildete Stromabzweigung kann dabei, wie in Figur 4 dargestellt, zwischen der Entkopplungseinrichtung 200 bzw. der Trenneinrichtung 131 und der Leistungsbegrenzungseinrichtung 300 ausgebildet sein. Das interne Netzteil 132 kann dazu genutzt werden, um interne Einrichtungen des Feldgeräts 100, zum Beispiel ein im Rahmen der Datenkommunikation genutzter und weiter unten beschriebener Kommunikationscontroller 150, mit elektrischer Energie zu versorgen.

Anhand der folgenden Figuren 8 bis 11 werden mögliche Ausgestaltungen der mit der Anschlusseinrichtung 160 des zweiten Gerätebereichs 102 verbundenen Leistungsbegrenzungseinrichtung 300 der Feldgeräte 100 beschrieben. In diesem Zusammenhang wird darauf hingewiesen, dass die abgebildeten Schaltbilder als Prinzipschaltbilder anzusehen sind. Insofern ist es möglich, in den einzelnen Schaltbildern gezeigte Komponenten und Einrichtungen durch andere gleich wirkende Komponenten und Einrichtungen zu ersetzen und/oder für gezeigte Komponenten und Einrichtungen eine andere Ausgestaltung bzw. Anordnung vorzusehen.

Figur 8 zeigt eine mögliche Auslegung der Leistungsbegrenzungseinrichtung 300, wie sie für das in Figur 4 gezeigte Feldgerät 100 (und damit sämtliche Feldgeräte 100 des Systems 50) in Betracht kommen kann. Mit Hilfe der Leistungsbegrenzungseinrichtung 300 können eine Strombegrenzung und eine Spannungsbegrenzung hervorgerufen werden. Die Leistungsbegrenzungseinrichtung 300 weist eine eingangsseitig angeordnete Schutzeinrichtung 310, eine der Schutzeinrichtung 310 nachangeordnete Spannungsbegrenzungseinrichtung 320 und eine der Spannungsbegrenzungseinrichtung 320 nachgeordnete ausgangsseitige erste Strombegrenzungseinrichtung 311 auf. Die Schutzeinrichtung 310, welche in Reihe zu der ersten Strombegrenzungseinrichtung 311 geschaltet ist, umfasst einen optionalen Schutzwiderstand 317 und eine seriell mit dem Schutzwiderstand 317 verbundene Schmelzsicherung 316. Der Schutzwiderstand 317 kann auch entfallen. Die erste Strombegrenzungseinrichtung 311 umfasst einen Widerstand 315. Die Spannungsbegrenzungseinrichtung 320, über welche ein die Schutzeinrichtung 310 und die erste Strombegrenzungseinrichtung 311 umfassender Leitungspfad mit einem weiteren und gemäß der Darstellung von Figur 8 lediglich einen internen elektrischen Leiter 171 umfassenden Leitungspfad verbunden ist, umfasst zwei zueinander parallel geschaltete spannungsbegrenzende Bauelemente bzw. Halbleiter-Bauelemente. In der vorliegend gezeigten Ausgestaltung handelt es sich hierbei um zwei Zener-Dioden 321.

Bei der in Figur 8 gezeigten Leistungsbegrenzungseinrichtung 300 dient der Widerstand 315 der ersten Strombegrenzungseinrichtung 311 zum Bewirken der Strombegrenzung. Über die Schmelzsicherung 316 und den optionalen Schutzwiderstand 317 der Schutzeinrichtung 310 kann eine Absicherung der Spannungsbegrenzungseinrichtung 320 bzw. von deren Zener-Dioden 321 erzielt werden. Bezüglich der Spannungsbegrenzung werden die Zener-Dioden 321 bei der Leistungsbegrenzungseinrichtung 300 in Sperrrichtung betrieben, so dass die an den beiden Leitungspfaden anliegende Spannung auf eine durch die Zener-Dioden 321 vorgegebene Grenzspannung begrenzt wird. Für den Fall einer Spannungsüberschreitung werden die Zener-Dioden 321 leitend, wodurch die überschüssige Spannung in Wärme umgesetzt werden kann.

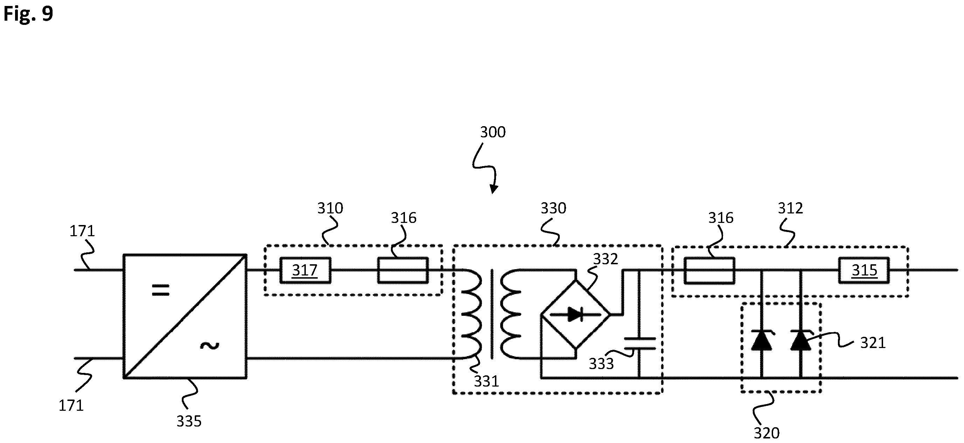

Figur 9 zeigt eine weitere Auslegung der Leistungsbegrenzungseinrichtung 300, wie sie für das in Figur 4 gezeigte Feldgerät 100 (und damit sämtliche Feldgeräte 100 des Systems 50) zum Einsatz kommen kann. Die Leistungsbegrenzungseinrichtung 300 dient zum Bewirken einer Strombegrenzung und Spannungsbegrenzung, und weist ferner eine galvanische Trennung auf. Die in Figur 9 gezeigte Ausgestaltung umfasst eine Kombination der in den Figuren 7 und 8 gezeigten Schaltbilder.

Wie in Figur 9 dargestellt ist, umfasst die Leistungsbegrenzungseinrichtung 300 eingangsseitig einen Wechselrichter 335, auf welchen nacheinander eine Schutzeinrichtung 310, eine Trennungs-Baugruppe 330 und eine Kombination aus einer zweiten Strombegrenzungseinrichtung 312 und einer Spannungsbegrenzungseinrichtung 320 folgt. Die Schutzeinrichtung 310 weist den oben anhand von Figur 8 erläuterten Aufbau mit einem optionalen Schutzwiderstand 317 und einer hiermit seriell verbundenen Schmelzsicherung 316 auf. Die Trennungs-Baugruppe 330 weist den oben anhand von Figur 7 erläuterten Aufbau mit einem Übertrager 331, einem hiermit verbundenen Gleichrichter 332 und einem hierzu parallel geschalteten Glättungskondensator 333 auf. Die zweite Strombegrenzungseinrichtung 312 umfasst eine Schmelzsicherung 316 und einen seriell mit der Schmelzsicherung 316 verbundenen Widerstand 315. Die Spannungsbegrenzungseinrichtung 320 weist, entsprechend der in Figur 8 gezeigten Ausgestaltung, zwei parallel geschaltete spannungsbegrenzende Bauelemente, vorliegend erneut in Form von Zener-Dioden 321 auf, über welche ein die zweite Strombegrenzungseinrichtung 312 umfassender Leitungspfad mit einem weiteren Leitungspfad verbunden ist. Die Zener-Dioden 321 sind in einem Bereich zwischen der Schmelzsicherung 316 und dem Widerstand 315 der zweiten Strombegrenzungseinrichtung 312 an den die zweite Strombegrenzungseinrichtung 312 umfassenden Leitungspfad angeschlossen.

Bei der in Figur 9 abgebildeten Leistungsbegrenzungseinrichtung 300 ist die galvanische Trennung durch den Übertrager 331 der Trennungs-Baugruppe 330 verwirklicht. Mit Hilfe des Wechselrichters 335 kann die als Gleichstrom vorliegende elektrische Energie in einen Wechselstrom umgewandelt, und über die Schutzeinrichtung 310 dem Übertrager 331 zugeführt werden. Der von dem Übertrager 331 ausgegebene Wechselstrom kann mit Hilfe des Gleichrichters 332 und des Glättungskondensator 333 gleichgerichtet und geglättet werden, wodurch ausgangsseitig der Trennungs-Baugruppe 330, und dadurch auch ausgangsseitig der Leistungsbegrenzungseinrichtung 300, ein Gleichstrom vorliegt. Der Widerstand 315 der zweiten Strombegrenzungseinrichtung 312 dient zum Hervorrufen der Strombegrenzung. Über die Schmelzsicherung 316 und den optionalen Schutzwiderstand 317 der Schutzeinrichtung 310 kann eine Absicherung des Übertragers 331, und über die Schmelzsicherung 316 der zweiten Strombegrenzungseinrichtung 312 kann eine Absicherung der Spannungsbegrenzungseinrichtung 320 erzielt werden. Die Spannungsbegrenzungseinrichtung 320, bei welcher die Zener-Dioden 321 in Sperrrichtung betrieben werden, dient zum Bewirken der Spannungsbegrenzung.

Mit Hilfe der Leistungsbegrenzungseinrichtung 300 des in Figur 4 gezeigten Feldgeräts 100 kann eine gemeinsame Strombegrenzung und Spannungsbegrenzung in Bezug auf die Ausgangsleitungsanschlüsse 165 der Anschlusseinrichtung 160 hervorgerufen werden. Dies kann mit Hilfe der in den Figuren 8 und 9 gezeigten Ausgestaltungen der Leistungsbegrenzungseinrichtung 300 erzielt werden. Die über die Leistungsbegrenzungseinrichtung 300 transportierte elektrische Energie kann, wie in Figur 4 gezeigt, weiter über den mit der Leistungsbegrenzungseinrichtung 300 verbundenen Eingabe/Ausgabe-Controller 161 zu den Ausgangsleitungsanschlüssen 165 geleitet werden, um Feldkomponenten 600 über hieran angeschlossene Ausgangsleitungen 510 elektrisch zu versorgen (vgl. die Figuren 1, 2). Der Eingabe/Ausgabe-Controller 161 bzw. die Anschlusseinrichtung 160 können zu diesem Zweck eine geeignete Ausgestaltung mit elektrischen Leitern aufweisen, um die elektrische Energie durch den Eingabe/Ausgabe-Controller 161 hindurch zu den einzelnen Ausgangsleitungsanschlüssen 165 zu leiten. In einer alternativen Ausgestaltung kann die elektrische Energie über entsprechende elektrische Leiter an dem Eingabe/Ausgabe-Controller 161 vorbei bzw. parallel zu dem Eingabe/Ausgabe-Controller 161 zu den Ausgangsleitungsanschlüssen 165 geleitet werden (jeweils nicht dargestellt).

Für die Leistungsbegrenzungseinrichtung 300 sind darüber hinaus Ausgestaltungen denkbar, mit welchen mehrere separate und gegebenenfalls unterschiedliche Strombegrenzungen und/oder mehrere separate und gegebenenfalls unterschiedliche Spannungsbegrenzungen bewirkt werden können. Auf diese Weise können separate und gegebenenfalls unterschiedliche Strombegrenzungen und/oder Spannungsbegrenzungen in Bezug auf einzelne oder mehrere Ausgangsleitungsanschlüsse 165 vorliegen.

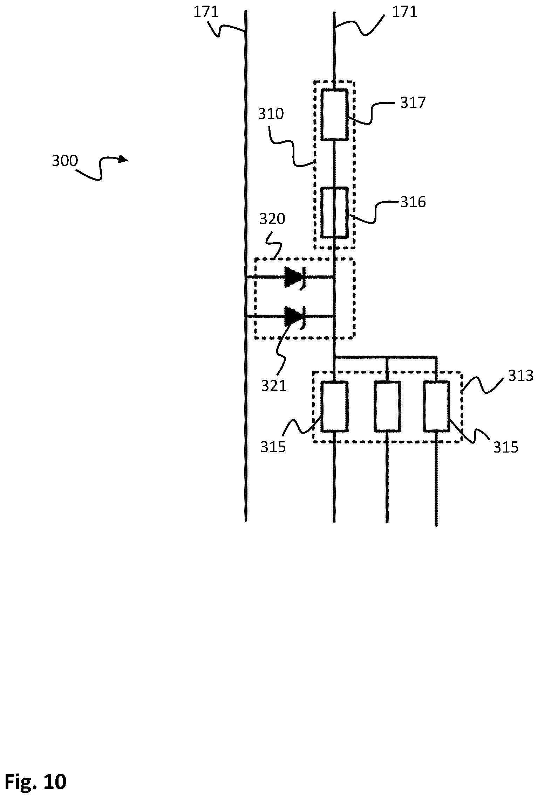

Es besteht zum Beispiel die Möglichkeit, die Leistungsbegrenzungseinrichtung 300 dahingehend auszubilden, dass in Bezug auf die Ausgangsleitungsanschlüsse 165 eine gemeinsame Spannungsbegrenzung und mehrere kleinteilige bzw. aufgegliederte Strombegrenzungen vorliegen. Zur Veranschaulichung zeigt Figur 10 eine weitere mögliche Ausgestaltung der Leistungsbegrenzungseinrichtung 300, wie sie für das in Figur 4 gezeigte Feldgerät 100 (und damit sämtliche Feldgeräte 100 des Systems 50) denkbar ist. Die Leistungsbegrenzungseinrichtung 300 weist eingangsseitig eine Schutzeinrichtung 310 auf, welcher eine Spannungsbegrenzungseinrichtung 320 und eine dritte Strombegrenzungseinrichtung 313 nachgeordnet sind.

Die Schutzeinrichtung 310 weist den oben anhand von Figur 8 erläuterten Aufbau mit einem optionalen Schutzwiderstand 317 und einer hiermit seriell verbundenen Schmelzsicherung 316 auf. Die Spannungsbegrenzungseinrichtung 320 umfasst, entsprechend der in Figur 8 gezeigten Ausgestaltung, zwei spannungsbegrenzende Bauelemente, vorliegend erneut in Form von Zener-Dioden 321, über welche ein die Schutzeinrichtung 310 umfassender Leitungspfad mit einem weiteren Leitungspfad verbunden ist. Mit Bezug auf die dritte Strombegrenzungseinrichtung 313, welche mehrere parallel geschaltete Widerstände 315 umfasst, ist eine Aufteilung bzw. Aufgliederung des die Schutzeinrichtung 310 umfassenden Leitungspfads in mehrere weitere Leitungspfade ausgebildet, welche jeweils einen Widerstand 315 der dritten Strombegrenzungseinrichtung 313 aufweisen, und welche jeweils zur Verbindung mit einem oder mehreren Ausgangsleitungsanschlüssen 165 der Anschlusseinrichtung 160 vorgesehen sind.

Bei der in Figur 10 gezeigten Leistungsbegrenzungseinrichtung 300 dienen die Widerstände 315 der dritten Strombegrenzungseinrichtung 313 zum Bewirken einer Strombegrenzung, und dienen die in Sperrrichtung betriebenen Zener-Dioden 321 der Spannungsbegrenzungseinrichtung 320 zum Bewirken einer Spannungsbegrenzung. Über die Schmelzsicherung 316 und den optionalen Schutzwiderstand 317 der Schutzeinrichtung 310 kann die Spannungsbegrenzungseinrichtung 320 abgesichert werden. Über die aufgeteilte dritte Strombegrenzungseinrichtung 313 können separate und, sofern unterschiedlich große Widerstände 315 bei der dritten Strombegrenzungseinrichtung 313 zum Einsatz kommen, auch unterschiedliche Strombegrenzungen in Bezug auf einzelne und/oder mehrere Ausgangsleitungsanschlüsse 165 bzw. Gruppen von Ausgangsleitungsanschlüssen 165 hervorgerufen werden.

Mit Bezug auf die in Figur 10 gezeigte Leistungsbegrenzungseinrichtung 300 ist es möglich, auch diese mit einer zusätzlichen galvanischen Trennung auszubilden. Zu diesem Zweck können, analog zu der in Figur 9 gezeigten Ausgestaltung, zusätzliche Bauelemente wie ein Wechselrichter 335 und eine Trennungs-Baugruppe 330 zum Einsatz kommen. Hierbei kann der Wechselrichter 335 der Schutzeinrichtung 310 vorgeordnet sein, und kann zwischen der Schutzeinrichtung 310 und der Spannungsbegrenzungseinrichtung 320 die Trennungs-Baugruppe 330 angeordnet sein. Der Spannungsbegrenzungseinrichtung 320 kann ferner eine Schmelzsicherung 316 vorgeordnet sein (jeweils nicht dargestellt).

Wie oben angedeutet wurde, kann die Leistungsbegrenzungseinrichtung 300 der Feldgeräte 100 auch derart ausgestaltet sein, dass neben einer Strombegrenzung (d.h. eine gemeinsame Strombegrenzung oder mehrere separate Strombegrenzungen) mehrere separate und gegebenenfalls unterschiedliche Spannungsbegrenzungen in Bezug auf einzelne oder mehrere Ausgangsleitungsanschlüsse 165 hervorgerufen werden können. Hierfür kann die Leistungsbegrenzungseinrichtung 300 mehrere aufgegliederte bzw. aufgeteilte Leitungspfade und mehrere, gegebenenfalls eine unterschiedliche Spannungsbegrenzung bewirkende Spannungsbegrenzungseinrichtungen 320 aufweisen, über welche jeweils zwei Leitungspfade verbunden sind. In entsprechender Weise ist es möglich, eine zusätzliche galvanische Trennung, zum Beispiel unter Verwendung von in Figur 9 gezeigten Bauelementen, vorzusehen (jeweils nicht dargestellt).

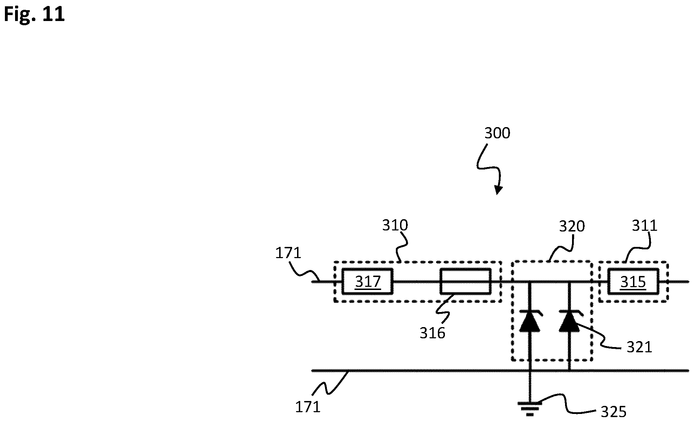

Es wird ferner auf die Möglichkeit hingewiesen, weder bei den Feldgeräten 100 noch bei dem Einspeisegerät 400 des Systems 50 eine galvanische Trennung vorzusehen. In einem solchen Fall können die Feldgeräte 100 mit einer Erdanbindung ausgestaltet werden, um eine sichere Betriebsweise zu ermöglichen. Die Erdanbindung kann im Bereich der Leistungsbegrenzungseinrichtung 300 vorgesehen sein. Zur Veranschaulichung zeigt Figur 11 eine weitere Auslegung der Leistungsbegrenzungseinrichtung 300, wie sie für das in Figur 4 gezeigte Feldgerät 100 (und damit sämtliche Feldgeräte 100 des Systems 50) zum Einsatz kommen kann. Die Leistungsbegrenzungseinrichtung 300 von Figur 11 stimmt im Wesentlichen mit der in Figur 8 gezeigten Ausgestaltung überein, und weist zusätzlich einen Erdungsanschluss 325 an einem internen elektrischen Leiter 171 bzw. an einem Leitungspfad auf. Sofern eine Leistungsbegrenzungseinrichtung 300 mit einem Aufbau entsprechend Figur 10 oder einem anderen Aufbau zum Einsatz kommt, kann auch hier ein entsprechender Erdungsanschluss 325 ausgebildet sein (nicht dargestellt).

Wie oben angedeutet wurde, dient das System 50 neben einer Energieversorgung der Feldgeräte 100 und der hieran angeschlossenen Feldkomponenten 600 auch zum Durchführen einer Datenkommunikation, um zum Beispiel Steuerdaten bzw. Steuersignale, welche durch die übergeordnete Steuervorrichtung 700 ausgegeben werden können, an Aktoren zu übermitteln, sowie Sensordaten bzw. Sensorsignale von Sensoren zu empfangen und an die Steuervorrichtung 700 zu übermitteln.

Die Feldgeräte 100 können zu diesem Zweck einen Aufbau und Bestandteile aufweisen, wie er in Figur 4 für eines der Feldgeräte 100 abgebildet ist. Hierbei weist der erste Gerätebereich 101 einen ersten Kommunikationsanschluss 120, einen zweiten Kommunikationsanschluss 121 und einen Kommunikationscontroller 150 auf. Der Kommunikationscontroller 150 kann monolithisch oder diskret aufgebaut sein. Über den ersten Kommunikationsanschluss 120, sowie auch über den zweiten Kommunikationsanschluss 121, können Datensignale gesendet und empfangen werden. Der erste Kommunikationsanschluss 120 ist über eine erste Barriereschaltung 140, eine erste physikalische Schnittstelle 145 und interne Datenleitungen 176 des Feldgeräts 100 mit dem Kommunikationscontroller 150 verbunden. Der zweite Kommunikationsanschluss 121 ist über eine zweite Barriereschaltung 141, eine zweite physikalische Schnittstelle 146 und interne Datenleitungen 176 des Feldgeräts 100 mit dem Kommunikationscontroller 150 verbunden. Hierdurch kann der Kommunikationscontroller 150 sowohl über den ersten Kommunikationsanschluss 120 als auch über den zweiten Kommunikationsanschluss 121 Datensignale senden und empfangen.

Die internen Datenleitungen 176 des Feldgeräts 100 können mehrere elektrische Leiter, zum Beispiel in Form von Leiterbahnen, aufweisen (nicht dargestellt). Die erste und zweite Barriereschaltung 140, 141 sind ausgebildet, eine zu dem ersten bzw. zweiten Kommunikationsanschluss 120, 121 des ersten Gerätebereichs 101 im Zuge der Datenkommunikation übertragbare elektrische Leistung zu limitieren und/oder eine galvanische Trennung hervorzurufen. Ein Auftreten eines Funkens bzw. Zündfunkens mit für eine Zündung ausreichender Energie im Bereich der Kommunikationsanschlüsse 120, 121 aufgrund der Datenkommunikation kann infolgedessen vermieden werden. Auf diese Weise kann eine hohe Sicherheit in Bezug auf die Datenkommunikation erzielt werden, was im Hinblick auf das in Figur 2 gezeigte Anwendungsszenario eine Anordnung der Feldgeräte 100 in Zone 1/21 der ATEX-Richtlinie (zweiter Bereich 11 gemäß Figur 2) möglich macht. Zum Zwecke der Leistungslimitierung können die erste und zweite Barriereschaltung 140, 141 elektrische Bauelemente wie wenigstens eine Diode und wenigstens einen Widerstand umfassen. Eine galvanische Trennung kann mit einer Ausgestaltung der ersten und zweiten Barriereschaltung 140, 141 mit einem Übertrager oder einer Kapazität verwirklicht sein (jeweils nicht dargestellt). Die erste und zweite physikalische Schnittstelle 145, 146, welche in Form von physikalischen Schnittstellenbausteinen ausgebildet sein können, dienen zum Verarbeiten, d.h. zum Kodieren bzw. Dekodieren von Datensignalen. Gegebenenfalls können die erste und zweite physikalische Schnittstelle 145, 146 jeweils eine zusätzliche energielimitierende Barriereschaltung aufweisen (nicht dargestellt).

Figur 4 zeigt ferner, dass der Eingangsanschluss 110 in Form eines Hybridanschlusses verwirklicht ist, welcher den ersten Kommunikationsanschluss 120 umfasst. In entsprechender Weise ist der Ausgangsanschluss 111 in Form eines weiteren Hybridanschlusses ausgebildet, welcher den zweiten Kommunikationsanschluss 121 umfasst. In dieser Ausgestaltung können der Eingangsanschluss 110 und der Ausgangsanschluss 111 sowohl zur Einspeisung bzw. Übertragung von elektrischer Energie zur Energieversorgung als auch zur Übertragung von Datensignalen genutzt werden. In entsprechender Weise können die an den Eingangsanschluss 110 und Ausgangsanschluss 111 angeschlossenen Versorgungsleitungen 500 (vgl. Figur 1) gleichzeitig als Datenleitungen fungieren, über welche elektrische Energie zur Energieversorgung und Datensignale übertragen werden können. Hierauf abgestimmt können die Versorgungsleitungen 500 entsprechende elektrische Leiter bzw. Adern zur Datenübertragung, und können die an den Enden der Versorgungsleitungen 500 vorgesehenen Steckverbinder zu den Kommunikationsanschlüssen 120, 121 korrespondierende Kommunikationsanschlüsse aufweisen (nicht dargestellt). Dadurch ist es möglich, den Verkabelungsaufwand bei dem System 50 gering zu halten.

Die Feldgeräte 100 des Systems 50 bzw. deren Kommunikationscontroller 150 können über den Eingangsanschluss 110 und den Ausgangsanschluss 111 Datensignale empfangen und senden. Auf diese Weise ist eine Datenkommunikation zwischen den Feldgeräten 100 untereinander und zwischen den Feldgeräten 100 und dem Einspeisegerät 400 möglich. Letztere kann über das erste Feldgerät 100-1 des Systems 50 erfolgen, welches wie in Figur 1 dargestellt über eine an den Eingangsanschluss 110 angeschlossene Versorgungsleitung 500 mit dem Einspeisegerät 400 verbunden ist.

Figur 4 zeigt des Weiteren, dass der Kommunikationscontroller 150 des ersten Gerätebereichs 101 über eine Kommunikationsverbindung 175 mit der Anschlusseinrichtung 160 des zweiten Gerätebereichs 102 bzw. mit dem Eingabe/Ausgabe-Controller 161 verbunden ist. Hierdurch kann der Kommunikationscontroller 150 Datensignale über die Anschlusseinrichtung 160 empfangen und senden. Auf diese Weise ist eine Datenkommunikation zwischen dem Kommunikationscontroller 150 und Feldkomponenten 600 möglich, welche über Ausgangsleitungen 510 mit Ausgangsleitungsanschlüssen 165 der Anschlusseinrichtung 160 verbunden sein können (vgl. Figur 1). Die Datenkommunikation kann dabei über den Eingabe/Ausgabe-Controller 161 der Anschlusseinrichtung 160 erfolgen.

Wie in Figur 4 dargestellt ist, umfasst die Kommunikationsverbindung 175, neben entsprechenden internen Datenleitungen des Feldgeräts 100, welche elektrische Leiter in Form von Leiterbahnen umfassen können (nicht dargestellt), eine Barriereeinrichtung 155. Die Barriereeinrichtung 155 ist ausgebildet, eine Begrenzung einer von dem Kommunikationscontroller 150 zu der Anschlusseinrichtung 160 bei einer Datenkommunikation übertragbaren elektrischen Leistung und/oder eine galvanische Trennung hervorzurufen.

Die Verwendung der Barriereeinrichtung 155 bei den Feldgeräten 100 des Systems 50 dient ebenfalls dazu, eine hohe Sicherheit in Bezug auf die Datenkommunikation zur Verfügung zu stellen. Mit Hilfe der Barriereeinrichtung 155 kann erreicht werden, dass die elektrische Leistung, welche im Zuge der Datenkommunikation in die zweiten Gerätebereiche 102 der Feldgeräte 100 eingebracht werden kann, limitiert ist. Hierdurch kann sichergestellt werden, dass aufgrund der Datenkommunikation kein Funke bzw. Zündfunke mit für eine Zündung ausreichender Energie im Bereich der Anschlusseinrichtungen 160 bzw. Ausgangsleitungsanschlüsse 165 der zweiten Gerätebereiche 102 der Feldgeräte 100, der Ausgangsleitungen 510 und der über die Ausgangsleitungen 510 an die Feldgeräte 100 angeschlossenen Feldkomponenten 600 hervorgerufen werden kann. Infolgedessen können die Feldkomponenten 600 entsprechend des in Figur 2 abgebildeten Anwendungsszenarios in Zone 0/20 der ATEX-Richtline (erster Bereich 10 gemäß Figur 2) angeordnet sein, und können sich die Feldgeräte in Zone 1/21 der ATEX-Richtline (zweiter Bereich 11 gemäß Figur 2) befinden.

Die Barriereeinrichtung 155 der Kommunikationsverbindung 175 kann in Form eines Digitalisolators wie zum Beispiel eines Optokopplers oder eines Magnetkopplers ausgebildet sein (nicht dargestellt). In einer solchen Ausgestaltung kann durch die Barriereeinrichtung 155 eine zuverlässige und sichere Leistungslimitierung zusammen mit einer galvanischen Trennung erzielt werden.

Der in Figur 4 dargestellte Eingabe/Ausgabe-Controller 161, über welchen der Kommunikationscontroller 150 mit Feldkomponenten 600 kommunizieren kann, kann dazu ausgebildet sein, das Senden und Empfangen von Datensignalen über die Anschlusseinrichtung 160 bzw. über deren Ausgangsleitungsanschlüsse 165 zu steuern. Derartige Datensignale kann der Eingabe/Ausgabe-Controller über die Kommunikationsverbindung 175 zuvor von dem Kommunikationscontroller 150 empfangen bzw. nachfolgend zu dem Kommunikationscontroller 150 weiterleiten.

Hierbei können von dem Kommunikationscontroller 150 kommende und durch den Eingabe/Ausgabe-Controller 161 empfangene Datensignale (zum Beispiel Steuerdaten) mit Hilfe des Eingabe/Ausgabe-Controllers 161 zu Feldkomponenten 600 (zum Beispiel Aktoren) weiter gesendet werden. Ferner können von Feldkomponenten 600 (zum Beispiel Sensoren) kommende und durch den Eingabe/Ausgabe-Controller 161 empfangene Datensignale (zum Beispiel Sensordaten) mit Hilfe des Eingabe/Ausgabe-Controllers 161 weiter zu dem Kommunikationscontroller 150 gesendet werden. Gegebenenfalls kann ferner eine Umsetzung bzw. Verarbeitung der jeweils empfangenen Datensignale durch den Eingabe/Ausgabe-Controller 161 vor deren Weitersenden erfolgen.

Der Eingabe/Ausgabe-Controller 161 kann darüber hinaus dazu ausgebildet sein, ein im Rahmen der elektrischen Energieversorgung durchgeführtes Weiterleiten von elektrischer Energie zu Feldkomponenten 600 über die Ausgangsleitungsanschlüsse 165 zu steuern. Auf diese Weise kann das Verteilen der elektrischen Energie über die Anschlusseinrichtung 160 flexibel festgelegt werden. Dies kann zum Beispiel durch den Kommunikationscontroller 150 gesteuert werden, welcher zu diesem Zweck entsprechende Datensignale bzw. Steuerdaten an den Eingabe/Ausgabe-Controller 161 übermitteln kann. Derartige Steuerdaten können von der übergeordneten Steuervorrichtung 700 des Systems 50 erzeugt werden, oder auf von der Steuervorrichtung 700 erzeugten Steuerdaten basieren. In den vorgenannten Anwendungsfällen kann eine Kommunikation zwischen dem Kommunikationscontroller 150 und dem Eingabe/Ausgabe-Controller 161 zum Beispiel gemäß eines vorgegebenen Kommunikationsprotokolls, sowie über nicht dargestellte Schnittstellen des Kommunikationscontrollers 150 und des Eingabe/Ausgabe-Controllers 161, stattfinden.

Auch die Ansteuerung der in Figur 4 gezeigten Schalteinrichtung 180 zum Weiterleiten der elektrischen Energie über den Ausgangsanschluss 111 des Feldgeräts 100 kann zum Beispiel mit Hilfe des Kommunikationscontrollers 150 durchgeführt werden. Dies kann ebenfalls auf von der übergeordneten Steuervorrichtung 700 erzeugten Steuerdaten beruhen, welche der Kommunikationscontroller 150 empfangen kann.

Das Einspeisegerät 400 des Systems 50 ist, wie oben angegeben, im Rahmen der Datenkommunikation mit einbezogen. Zu diesem Zweck kann der in Figur 3 dargestellte Aufbau für das Einspeisegerät 400 zum Einsatz kommen. Hierbei weist das Einspeisegerät 400 einen Kommunikationseingang 405 auf. Über den Kommunikationseingang 405, welcher in Form eines Anschlusses des Einspeisegeräts 400 verwirklicht sein kann, kann das Einspeisegerät 400 mit der übergeordneten Steuervorrichtung 700 des Systems 50 verbunden sein. Auf diese Weise kann das Einspeisegerät 400 Datensignale von der Steuervorrichtung 700 empfangen und zu der Steuervorrichtung 700 übermitteln. Das Einspeisegerät 400 weist ferner einen Einspeisegerät-Kommunikationsanschluss 425 auf, über welchen Datensignale gesendet und empfangen werden können, und über welchen das Einspeisegerät 400 mit den Feldgeräten 100, d.h. mit dem ersten Feldgerät 100-1 und über dieses mit den anderen Feldgeräten 100, kommunizieren kann (vgl. Figur 1). Ein weiterer Bestandteil des Einspeisegeräts 400 ist ein Einspeisegerät-Kommunikationscontroller 450, welcher über eine erste physikalische Einspeisegerät-Schnittstelle 445 und interne Datenleitungen 476 des Einspeisegerät 400 mit dem Kommunikationseingang 405 verbunden ist. Ferner ist der Einspeisegerät-Kommunikationscontroller 450 über eine zweite physikalische Einspeisegerät-Schnittstelle 446, eine Einspeisegerät-Barriereschaltung 430 und interne Datenleitungen 476 mit dem Einspeisegerät-Kommunikationsanschluss 425 verbunden. Auf diese Weise kann der Einspeisegerät-Kommunikationscontroller 450 über den Kommunikationseingang 405 und über den Einspeisegerät-Kommunikationsanschluss 425 Datensignale senden und empfangen.

Die erste und zweite physikalische Einspeisegerät-Schnittstelle 445, 446 dienen zum Kodieren bzw. Dekodieren von Datensignalen. Die Einspeisegerät-Barriereschaltung 430 ist ausgebildet, eine im Zuge der Datenkommunikation zu dem Einspeisegerät-Kommunikationsanschluss 425 übertragbare elektrische Leistung zu limitieren und/oder eine galvanische Trennung hervorzurufen. Hierdurch kann ein sicheres Durchführen der Datenkommunikation weiter begünstigt werden. Die Einspeisegerät-Barriereschaltung 430 kann Bauelemente wie wenigstens eine Diode und wenigstens einen Widerstand zur Leistungslimitierung und/oder einen Übertrager oder eine Kapazität zur galvanischen Trennung aufweisen (nicht dargestellt).

Entsprechend den Feldgeräten 100 ist der Einspeisegerät-Ausgangsanschluss 420 in Form eines Hybridanschlusses verwirklicht, welcher den Einspeisegerät-Kommunikationsanschluss 425 umfasst. Daher kann der Einspeisegerät-Ausgangsanschluss 420 zur Übertragung von elektrischer Energie und von Datensignalen genutzt werden. Ferner kann an den Einspeisegerät-Ausgangsanschluss 420 eine in Form einer Hybridleitung ausgebildete Versorgungsleitung 500 angeschlossen werden, welche einen Steckverbinder mit einem zu dem Einspeisegerät-Kommunikationsanschluss 425 korrespondierenden Kommunikationsanschluss aufweisen kann (nicht dargestellt). Hierdurch kann das Einspeisegerät 400 mit einem der Feldgeräte 100 (bzw. gemäß Figur 1 mit dem ersten Feldgerät 100-1) verbunden sein, um eine Übertragung von elektrischer Energie und einen Austausch von Datensignalen zu ermöglichen.

Der in Figur 3 gezeigte Aufbau des Einspeisegeräts 400 macht es möglich, eine Datenkommunikation zwischen dem Einspeisegerät 400 und der Steuervorrichtung 700, sowie zwischen dem Einspeisegerät 400 und den Feldgeräten 100 (über das erste Feldgerät 100-1, vgl. Figur 1) durchzuführen. Die Feldgeräte 100 können ebenfalls untereinander, sowie mit den hieran angeschlossenen Feldkomponenten 600 kommunizieren. Auf diese Weise ist eine Datenkommunikation zwischen der Steuervorrichtung 700 und den Feldkomponenten 600 über das Einspeisegerät 400 und die Feldgeräte 100 möglich.

Im Folgenden werden weitere mögliche Varianten und Ausgestaltungen beschrieben, welche in Bezug auf Bestandteile des Systems 50 wie die Feldgeräte 100 in Betracht kommen können. Übereinstimmende Merkmale und Details sowie gleiche und gleich wirkende Komponenten werden im Folgenden nicht erneut detailliert beschrieben. Für Details hierzu wird stattdessen auf die obige Beschreibung Bezug genommen. Ferner können Aspekte und Details, welche in Bezug auf eine Ausgestaltung genannt werden, auch in Bezug auf eine andere Ausgestaltung zur Anwendung kommen und können Merkmale von zwei oder mehreren Ausgestaltungen miteinander kombiniert werden.

Hinsichtlich der Feldgeräte 100 des Systems 50 können von Figur 4 abweichende Ausgestaltungen mit einer anderen Anzahl an zum Anschließen von Versorgungsleitungen 500 genutzten Anschlüssen in Betracht kommen.

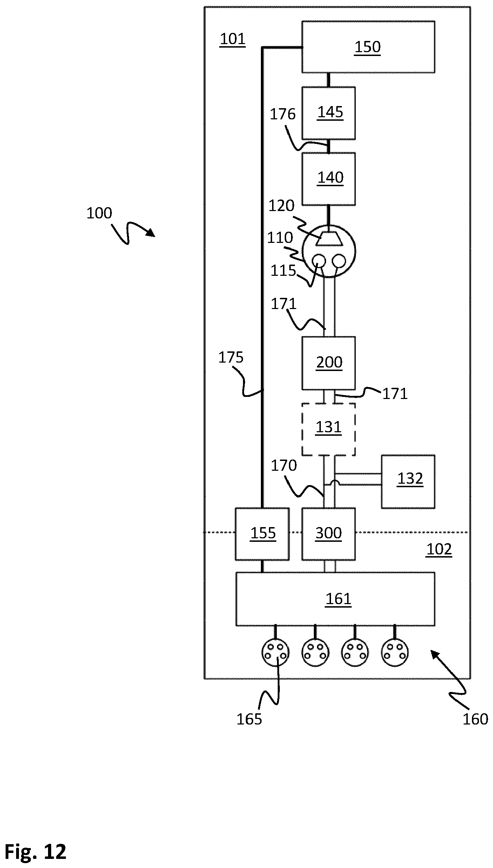

Zur Veranschaulichung zeigt Figur 12 eine Darstellung eines Feldgeräts 100 gemäß einer zweiten Ausgestaltung. Das in Figur 12 dargestellte Feldgerät 100 weist im Unterschied zu der in Figur 4 abgebildeten Ausgestaltung keinen Ausgangsanschluss 111 auf. Dementsprechend fehlen ferner Bestandteile wie die Schalteinrichtung 180, der zweite Kommunikationsanschluss 121, die zweite Barriereschaltung 141 und die zweite physikalische Schnittstelle 146. Der Eingangsanschluss 110 des Feldgeräts 100 von Figur 12 kann, entsprechend der Ausgestaltung von Figur 4, zur Einspeisung von elektrischer Energie in das Feldgerät 100 bzw. in dessen ersten Gerätebereich 101 und zur Datenkommunikation genutzt werden.

Das in Figur 12 gezeigte Feldgerät 100 kann als Endgerät dienen, und zum Beispiel am Ende einer Reihe bzw. eines Strangs von Feldgeräten 100 zum Einsatz kommen, um die dem Feldgerät 100 zugeführte Energie lediglich an Feldkomponenten 600 weiterzuleiten, und um eine Datenkommunikation über das Feldgerät 100 mit den Feldkomponenten 600 durchzuführen. In dieser Hinsicht kann zum Beispiel für das in Figur 1 gezeigte dritte Feldgerät 100-3 eine Ausgestaltung entsprechend Figur 12 zum Einsatz kommen.

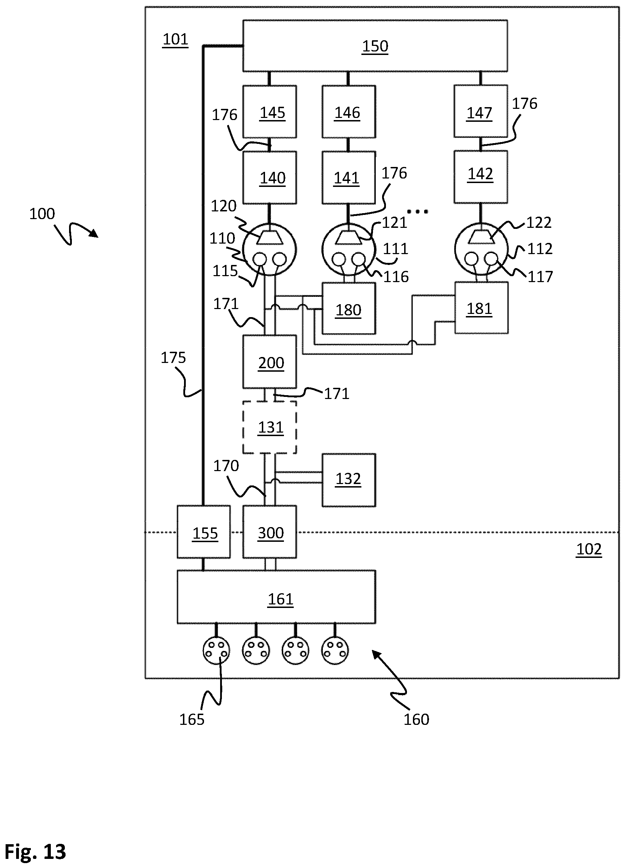

Figur 13 zeigt eine Darstellung eines Feldgeräts 100 gemäß einer dritten Ausgestaltung. Das in Figur 13 dargestellte Feldgerät 100 weist im Unterschied zu der in Figur 4 abgebildeten Ausgestaltung (wenigstens) einen weiteren Ausgangsanschluss 112 auf. Der weitere Ausgangsanschluss 112 ist entsprechend des Ausgangsausschlusses 111 in Form eines Hybridanschlusses ausgebildet und weist, neben im Rahmen der elektrischen Energieversorgung genutzten Anschlusskontakten 117, einen weiteren Kommunikationsanschluss 122 auf. Der weitere Kommunikationsanschluss 122 ist über eine weitere Barriereschaltung 142, eine weitere physikalische Schnittstelle 147 und interne Datenleitungen 176 des Feldgeräts 100 mit dem Kommunikationscontroller 150 verbunden. Auf diese Weise kann der Kommunikationscontroller 150 auch über den weiteren Kommunikationsanschluss 122 Datensignale senden und empfangen. Die weitere Barriereschaltung 142 ist entsprechend der ersten und zweiten Barriereschaltung 140, 141 dazu ausgebildet, eine zu dem weiteren Kommunikationsanschluss 122 des ersten Gerätebereichs 101 im Zuge der Datenkommunikation übertragbare elektrische Leistung zu limitieren und/oder eine galvanische Trennung hervorzurufen. Die weitere physikalische Schnittstelle 147 dient zum Verarbeiten, d.h. zum Kodieren bzw. Dekodieren von Datensignalen.

Das in Figur 13 gezeigte Feldgerät 100 kann über den ersten Ausgangsanschluss 111 und den weiteren Ausgangsanschluss 112, sowie unter Verwendung von zwei hieran angeschlossenen Versorgungsleitungen 500, mit zwei weiteren Feldgeräten 100 verbunden sein (nicht dargestellt). Über beide Ausgangsanschlüsse 111, 112 und die entsprechenden Versorgungsleitungen 500 kann eine Weiterleitung von elektrischer Energie und eine Datenkommunikation erfolgen. Das in Figur 13 gezeigte Feldgerät 100 kann in diesem Sinne als Verteiler für die Energieversorgung und Datenkommunikation genutzt werden.

Unter Verwendung von einem oder mehreren Feldgeräten 100 mit einer Ausgestaltung gemäß Figur 13 und mehreren Feldgeräten 100 mit einer Ausgestaltung gemäß Figur 4 kann somit ein System 50 mit mehreren verzweigten Reihen bzw. Strängen aus Feldgeräten 100 aufgebaut werden. Am Ende eines solchen Strangs kann ein Feldgerät 100 mit einer Ausgestaltung gemäß Figur 12 zum Einsatz kommen (jeweils nicht dargestellt).

Bei der in Figur 13 gezeigten Ausgestaltung weist der erste Gerätebereich 101 ferner eine weitere Schalteinrichtung 181 auf. Über die weitere Schalteinrichtung 181 und interne elektrische Leiter 171 des Feldgeräts 100 sind der Eingangsanschluss 110 und der weitere Ausgangsanschluss 112 des Feldgeräts 100 miteinander verbunden. Auf diese Weise kann das Weiterleiten der elektrischen Energie über den weiteren Ausgangsanschluss 112 gesteuert werden.

Mit Bezug auf das in Figur 13 gezeigte Feldgerät 100 besteht die Möglichkeit, mehrere weitere Ausgangsanschlüsse 112 mit jeweils einem weiteren Kommunikationsanschluss 122, und in entsprechender Weise mehrere weitere Barriereschaltungen 142 und physikalische Schnittstellen 147 zur jeweiligen Verbindung der weiteren Kommunikationsanschlüsse 122 mit dem Kommunikationscontroller 150 vorzusehen, wie in Figur 13 anhand von Punkten in einem Bereich zwischen den Barriereschaltungen 141, 142 angedeutet ist. In entsprechender Weise können mehrere weitere Schalteinrichtungen 181 vorgesehen sein, über welche jeweils der Eingangsanschluss 110 und jeweils ein weiterer Ausgangsanschluss 122 verbunden sind, um das Weiterleiten der elektrischen Energie zu steuern.

Im Hinblick auf die Datenkommunikation ist es möglich, ferner folgende Ausgestaltung in Bezug auf die anhand der Figuren 4, 12 und 13 erläuterten Feldgeräte 100 vorzusehen. Die Feldgeräte 100 können ausgebildet sein, eine Datenkommunikation über die Kommunikationsanschlüsse 120, 121, 122 und die physikalischen Schnittstellen 145, 146, 147 des ersten Gerätebereichs 101 gemäß eines ersten Kommunikationsprotokolls, und eine Datenkommunikation über die Anschlusseinrichtung 160 des zweiten Gerätebereichs 102 gemäß eines zweiten und sich von dem ersten Kommunikationsprotokoll unterscheidenden zweiten Kommunikationsprotokolls durchzuführen. Hierzu kann die Anschlusseinrichtung 160 bzw. kann der Eingabe/Ausgabe-Controller 161 entsprechende Schnittstellen bzw. physikalische Schnittstellen aufweisen (nicht dargestellt).

Auf diese Weise kann die Datenkommunikation zwischen den Feldgeräten 100 und den Feldkomponenten 600 von der übrigen Datenkommunikation, was den Datenaustausch zwischen den Feldgeräten 100 untereinander sowie zwischen den Feldgeräten 100 und der übergeordneten Steuervorrichtung 700 über das Einspeisegerät 400 umfassen kann, entkoppelt werden. Dies ermöglicht zum Beispiel eine unterschiedliche Auslegung im Hinblick auf unterschiedliche Anforderungen. Beispielsweise kann die Datenkommunikation zwischen den Feldgeräten 100 und den Feldkomponenten 600 mit einer geringeren Datenübertragungsrate erfolgen als die übrige Datenkommunikation.

Das erste Kommunikationsprotokoll kann sich zum Beispiel auf eine Ethernet-Kommunikation mit einer Datenübertragungsrate von beispielsweise 100MBit, wie zum Beispiel EtherCAT, beziehen. Das zweite Kommunikationsprotokoll kann sich zum Beispiel auf eine Kommunikation gemäß HART oder Profibus PA beziehen. Das zweite Kommunikationsprotokoll kann sich ferner ebenfalls auf eine Ethernet-Kommunikation beziehen, wobei im Unterschied zu dem ersten Ethernet-Kommunikationsprotokoll eine kleinere Datenübertragungsrate von beispielsweise 10MBit eingesetzt wird. In diesem Zusammenhang können für die Datenkommunikation verwendete interne Komponenten der Anschlusseinrichtung 160 bzw. des Eingabe/Ausgabe-Controllers 161 gegebenenfalls gemäß des zukünftigen APL-Standards (Advanced Physical Layer) ausgebildet sein.

Im Hinblick auf das in Figur 2 dargestellte Anwendungsszenario können ferner folgende Merkmale für die Feldgeräte 100 des Systems 50 zur Anwendung kommen. Die Anschlüsse des ersten Gerätebereichs 101 der Feldgeräte 100, also der Eingangsanschluss 110 und, sofern vorhanden, der bzw. die Ausgangsanschlüsse 111, 112, können gemäß einer ersten Zündschutzart, und die Ausgangsleitungsanschlüsse 165 des zweiten Gerätebereichs 102 der Feldgeräte 100 können gemäß einer zweiten Zündschutzart ausgebildet sein, wobei die zweite Zündschutzart einem größeren Schutzniveau entspricht als die erste Zündschutzart. Die zweite Zündschutzart kann die Zündschutzart Eigensicherheit Ex ia, und die erste Zündschutzart kann die Zündschutzart Eigensicherheit Ex ib sein.

Für das Erfüllen der unterschiedlichen Zündschutzarten können im Bereich der jeweiligen Anschlüsse 110, 111, 112, 165 des ersten und zweiten Gerätebereichs 101, 102 vorliegende Bestandteile wie interne Komponenten und elektrische Leiter den Zündschutzarten genügende Ausgestaltungen, zum Beispiel im Hinblick auf Abstände und Redundanzen, aufweisen. Bei den in den Figuren 5, 8, 9, 10 und 11 gezeigten Schaltbildern liegen ebenfalls redundante Ausgestaltungen vor, welche zu den Zündschutzarten bzw. zu der Eigensicherheit Ex ib und Ex ia der Anschlüsse 110, 111, 112, 165 beitragen können. In diesem Sinne weist die weitere Baugruppe 210 zwei Dioden 211, weist die kapazitive Baugruppe 240 zwei Kapazitäten 241, weist die Klemmschaltung 220 zwei Stränge aus Dioden 211, und weist die Spannungsbegrenzungseinrichtung 320 zwei Zener-Dioden 321 auf. Die mit Hilfe des Einspeisegeräts 400 verwirklichte Überwachung der Energieversorgung der Feldgeräte 100 kann ebenfalls zur Eigensicherheit Ex ib der Anschlüsse 110, 111, 112 des ersten Gerätebereichs 101 beitragen. Mit Bezug auf die Ausgangsleitungsanschlüsse 165 des zweiten Gerätebereichs 102 können die mit Hilfe der Leistungsbegrenzungseinrichtung 300 und Barriereeinrichtung 155 erzielbare Leistungslimitierung zur Eigensicherheit Ex ia beitragen.

Um eine hohe Sicherheit des Systems 50 zu erzielen, können die Feldgeräte 100 ferner zum Beispiel mit einer Vergusskapselung (Schutzart Ex mb) ausgebildet sein. In dieser Ausgestaltung können die Feldgeräte 100 bzw. deren Gehäuse mit einer Vergussmasse verfüllt sein, wodurch das Eindringen eines explosionsfähigen Gemisches in die Feldgeräte 100 verhindert werden kann. Möglich ist auch eine Ausgestaltung von Teilen der Feldgeräte 100 gemäß erhöhter Sicherheit (Schutzart Ex eb). Es ist ferner eine weitere Schutzart für die Feldgeräte 100 denkbar, zum Beispiel eine Ausgestaltung mit einer druckfesten Kapselung (Schutzart Ex db).

Auch für das Einspeisegerät 400 kann eine Vergusskapselung (Schutzart Ex mb) oder eine druckfeste Kapselung (Schutzart Ex db), und kann eine teilweise Ausgestaltung gemäß erhöhter Sicherheit (Schutzart Ex eb) in Betracht kommen.

Die Feldkomponenten 600 können eigensichere Feldkomponenten sein, und gemäß der Zündschutzart Eigensicherheit Ex ia ausgestaltet sein.

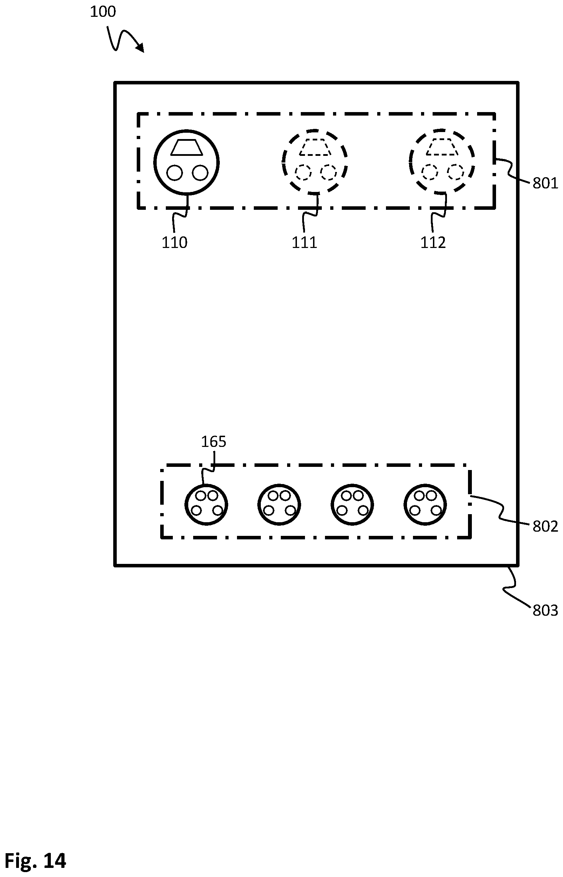

Mit Bezug auf die Feldgeräte 100 des Systems 50 wird ergänzend auf Folgendes hingewiesen. Der oben beschriebene Aufbau der Feldgeräte 100 mit einem ersten Gerätebereich 101 und einem zweiten Gerätebereich 102 kann sich auf eine schaltungstechnische Betrachtungsweise der Feldgeräte 100 beziehen. Aus Sicht des Explosionsschutzes können den Feldgeräten 100 auch drei Bereiche zugeordnet werden, welche im Folgenden als erster Geräteabschnitt 801, zweiter Geräteabschnitt 802 und dritter Geräteabschnitt 803 bezeichnet werden. Wie in Figur 14 anhand eines Feldgeräts 100 angedeutet ist, umfasst der erste Geräteabschnitt 801 den Eingangsanschluss 110, und, je nach Ausgestaltung des Feldgeräts 100, einen oder mehrere Ausgangsanschlüsse 111, 112. Der zweite Geräteabschnitt 802 umfasst die Ausgangsleitungsanschlüsse 165 des Feldgeräts 100. Der dritte Geräteabschnitt 803, welcher das Feldgerät 100 an sich betrifft, umfasst Bestandteile wie die mit den jeweiligen Anschlüssen 110, 111, 112, 165 verbundene(n) Schaltung bzw. Schaltungskomponenten des Feldgeräts 100.

Der erste Geräteabschnitt 801 kann einer ersten Zündschutzart, der zweite Geräteabschnitt 802 kann einer zweiten Zündschutzart, und der dritte Geräteabschnitt 803 kann einer dritten Zündschutzart entsprechend ausgebildet sein. Die erste, zweite und dritte Zündschutzart können sich voneinander unterscheiden. Wie oben angegeben wurde, können die Feldgeräte 100 bzw. deren Anschlüsse 110, 111, 112, 165 derart ausgebildet sein, dass die erste Zündschutzart die Zündschutzart Eigensicherheit Ex ib, und dass die zweite Zündschutzart die Zündschutzart Eigensicherheit Ex ia ist. Die Überwachung der Energieversorgung der Feldgeräte 100 durch das Einspeisegerät 400 kann ebenfalls zur Eigensicherheit Ex ib des ersten Geräteabschnitts 801 beitragen. Die mit Hilfe der Leistungsbegrenzungseinrichtung 300 und Barriereeinrichtung 155 erzielbare Leistungslimitierung innerhalb der Feldgeräte 100 kann zur Eigensicherheit Ex ia des zweiten Geräteabschnitts 802 beitragen. Im Hinblick auf den dritten Geräteabschnitt 803 und die dritte Zündschutzart ist es möglich, die Feldgeräte 100 mit einer Vergusskapselung oder mit einer äquivalenten Ausgestaltung wie beispielsweise einer druckfesten Kapselung auszubilden, so dass die dritte Zündschutzart die Zündschutzart Ex mb oder Ex db sein kann.

Neben den vorstehend beschriebenen und in den Figuren abgebildeten Ausführungsformen sind weitere Ausführungsformen vorstellbar, welche weitere Abwandlungen und/oder Kombinationen von Merkmalen umfassen können.

Eine mögliche Abwandlung besteht zum Beispiel darin, die in den Figuren 4 und 13 abgebildeten Feldgeräte 100 ohne eine Schalteinrichtung 180, 181 auszubilden. Auf diese Weise kann ein Eingangsanschluss 110 lediglich über interne elektrische Leiter 171 mit einem Ausgangsanschluss 111, 112 verbunden sein, und kann das Weiterleiten von elektrischer Energie über den Ausgangsanschluss 111, 112 nicht gesteuert werden.

Mit Bezug auf in den Figuren gezeigte Anschlüsse wie die Eingangsanschlüsse 110 und Ausgangsanschlüsse 111, 112 der Feldgeräte 100 und den Einspeisegerät-Ausgangsanschluss 420 des Einspeisegeräts 400 besteht die Möglichkeit, dass diese Anschlüsse neben zwei Anschlusskontakten 115, 116, 117, 421 einen zusätzlichen Massekontakt aufweisen.

Zur Spannungsbegrenzung können in einer Leistungsbegrenzungseinrichtung 300 (vgl. die Figuren 8, 9, 10, 11) anstelle von Zener-Dioden 321 andere sich zur Spannungsbegrenzung eignende Bauelemente bzw. Halbleiter-Bauelemente wie zum Beispiel Thyristoren zum Einsatz kommen.

Hinsichtlich der in Figur 5 gezeigten Entkopplungseinrichtung 200 ist es möglich, die Dioden 211 der weiteren Baugruppe 210 und/oder der Klemmschaltung 220 durch andere Bauelemente bzw. Halbleiter-Bauelemente zu ersetzen.

Mit Bezug auf das in Figur 3 abgebildete Einspeisegerät 400 wird darauf hingewiesen, dass für die in Figur 3 gezeigte und zur Energielimitierung eingesetzte Einspeisegerät-Begrenzungseinrichtung 403 ein Aufbau entsprechend des in Figur 8 oder 9 gezeigten Schaltbildes zur Anwendung kommen kann.

Hinsichtlich des Einspeisegeräts 400 besteht ferner die Möglichkeit, dieses abweichend von Figur 2 ebenfalls in Zone 1/21 gemäß der ATEX-Richtlinie (zweiter Bereich 11 in Figur 2) anzuordnen. Das Einspeisegerät 400 kann hierzu korrespondierend ausgebildet sein. Ferner können Maßnahmen wie zum Beispiel die Verwendung eines explosionsgesicherten Steckverbinders an einer zum Anschließen an den Stromversorgungseingang 401 des Einspeisegeräts 400 verwendeten Versorgungsleitung zum Einsatz kommen, über welche das Einspeisegerät 400 mit einer Stromquelle verbunden sein kann.

Bei den oben beschriebenen und in den Figuren 1, 4, 12 und 13 gezeigten Feldgeräten 100 ist eine Datenkommunikation zwischen den Feldgeräten 100 untereinander, und mit dem Einspeisegerät 400, in Form einer Punkt-zu-Punkt-Verbindung verwirklicht. Die Feldgeräte 100 und das Einspeisegerät 400 können des Weiteren dahingehend verwirklicht sein, dass eine Datenkommunikation auch über eine Bus-Struktur erfolgen kann.

In einer weiteren Abwandlung können die Feldgeräte 100 und das Einspeisegerät 400 derart ausgebildet sein, dass die elektrische Energieversorgung und die Datenkommunikation nicht unter Verwendung von Hybridleitungen und Hybridanschlüssen erfolgt, sondern stattdessen mit Hilfe von getrennten Versorgungsleitungen und Datenleitungen, sowie getrennten Anschlüssen für die Energieversorgung und Datenkommunikation, durchgeführt wird.

In einer weiteren Abwandlung kann ein Einspeisegerät 400 zum Einsatz kommen, welches zur elektrischen Energieversorgung von Feldgeräten 100 und Überwachung der elektrischen Energieversorgung, nicht jedoch zur Datenkommunikation ausgebildet ist, und daher nicht als Kommunikationsschnittstelle zwischen den Feldgeräten 100 und der übergeordneten Steuervorrichtung 700 dient. Hierbei können die Feldgeräte 100 bzw. kann eines der Feldgeräte 100 in geeigneter Weise mit der Steuervorrichtung 700 verbunden sein, um eine Datenkommunikation mit der Steuervorrichtung 700 zu ermöglichen. Zu diesem Zweck kann zum Beispiel ein Zusatzgerät zum Einsatz kommen, welches mit der Steuervorrichtung 700 verbunden ist. Das Zusatzgerät kann über eine lediglich zur elektrischen Energieversorgung ausgebildete Versorgungsleitung mit dem Einspeisegerät 400 verbunden sein, und über eine als Hybridleitung ausgebildete Versorgungsleitung mit einem der Feldgeräte 100 verbunden sein. Hierbei kann durch das Zusatzgerät eine Zusammenführung der elektrischen Energieversorgung und der Datenkommunikation erfolgen. Über das Zusatzgerät kann die durch das Einspeisegerät 400 bereitgestellte elektrische Energie zu den Feldgeräten 100 übertragen werden, und kann die Datenkommunikation zwischen der Steuervorrichtung 700 und den Feldgeräten 100 erfolgen. Die Feldgeräte 100 können ebenfalls über als Hybridleitungen ausgebildete Versorgungsleitungen miteinander verbunden sein.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen. Der Schutzumfang der Erfindung ist bestimmt durch Anspruch 1.

### Bezugszeichenliste

- 10: erster Bereich
- 11: zweiter Bereich
- 12: dritter Bereich
- 50: System
- 100: Feldgerät
- 101: erster Gerätebereich
- 102: zweiter Gerätebereich
- 110: Eingangsanschluss
- 111: Ausgangsanschluss
- 112: weiterer Ausgangsanschluss
- 115: Anschlusskontakt
- 116: Anschlusskontakt
- 117: Anschlusskontakt
- 120: erster Kommunikationsanschluss
- 121: zweiter Kommunikationsanschluss
- 122: weiterer Kommunikationsanschluss
- 131: Trenneinrichtung
- 132: internes Netzteil
- 140: erste Barriereschaltung
- 141: zweite Barriereschaltung
- 142: weitere Barriereschaltung
- 145: erste physikalische Schnittstelle
- 146: zweite physikalische Schnittstelle
- 147: weitere physikalische Schnittstelle
- 150: Kommunikationscontroller
- 155: Barriereeinrichtung
- 160: Anschlusseinrichtung
- 161: Eingabe/Ausgabe-Controller
- 165: Ausgangsleitungsanschluss
- 170: Energieversorgungsverbindung
- 171: interner Leiter
- 175: Kommunikationsverbindung
- 180: Schalteinrichtung
- 181: weitere Schalteinrichtung
- 200: Entkopplungseinrichtung
- 210: weitere Baugruppe
- 211: Diode
- 220: Klemmschaltung
- 230: Induktivität
- 240: kapazitive Baugruppe
- 241: Kapazität
- 250: Einschaltstrombegrenzer
- 251: Widerstand
- 252: Transistor
- 253: Regler
- 300: Leistungsbegrenzungseinrichtung
- 310: Schutzeinrichtung
- 311: erste Strombegrenzungseinrichtung
- 312: zweite Strombegrenzungseinrichtung
- 313: dritte Strombegrenzungseinrichtung
- 315: Widerstand
- 316: Schmelzsicherung
- 317: Schutzwiderstand
- 320: Spannungsbegrenzungseinrichtung
- 321: Zener-Diode
- 325: Erdungsanschluss
- 330: Trennungs-Baugruppe
- 331: Übertrager
- 332: Gleichrichter
- 333: Glättungskondensator
- 335: Wechselrichter
- 400: Einspeisegerät
- 401: Stromversorgungseingang
- 403: Einspeisegerät-Begrenzungseinrichtung
- 405: Kommunikationseingang
- 410: Überwachungseinrichtung
- 411: erster Detektor
- 412: zweiter Detektor
- 413: Einspeisegerät-Schalteinrichtung
- 414: Steuereinheit
- 420: Einspeisegerät-Ausgangsanschluss
- 421: Anschlusskontakt
- 425: Einspeisegerät-Kommunikationsanschluss
- 430: Einspeisegerät-Barriereschaltung
- 445: erste physikalische Einspeisegerät-Schnittstelle
- 446: zweite physikalische Einspeisegerät-Schnittstelle
- 450: Einspeisegerät-Kommunikationscontroller
- 471: interner Leiter
- 476: interne Datenleitung
- 500: Versorgungsleitung
- 510: Ausgangsleitung
- 600: Feldkomponente
- 700: Steuervorrichtung
- 801: erster Geräteabschnitt
- 802: zweiter Geräteabschnitt
- 803: dritter Geräteabschnitt

## Patentansprüche

1. System (50) umfassend ein Einspeisegerät (400) und mehrere mit dem Einspeisegerät (400) elektrisch verbundene Feldgeräte (100),
wobei das Einspeisegerät (400) ausgebildet ist, eine elektrische Energie zur elektrischen Energieversorgung der Feldgeräte (100) bereitzustellen,
wobei die Feldgeräte (100) jeweils einen ersten Gerätebereich (101) mit einem Eingangsanschluss (110) zum Anschließen einer Versorgungsleitung (500) und einen zweiten Gerätebereich (102) aufweisen,
wobei die von dem Einspeisegerät (400) bereitgestellte elektrische Energie über den Eingangsanschluss (110) dem ersten Gerätebereich (101) zuführbar und über eine elektrische Energieversorgungsverbindung (170) von dem ersten Gerätebereich (101) zu dem zweiten Gerätebereich (102) übertragbar ist,
wobei der zweite Gerätebereich (102) eine Anschlusseinrichtung (160) mit wenigstens einem Ausgangsleitungsanschluss (165) zum Anschließen wenigstens einer Ausgangsleitung (510) aufweist, um die zu dem zweiten Gerätebereich (102) übertragene elektrische Energie weiterzuleiten,
wobei die elektrische Energieversorgungsverbindung (170) des ersten und zweiten Gerätebereichs (101, 102) eine Leistungsbegrenzungseinrichtung (300) aufweist, welche ausgebildet ist, eine Begrenzung einer von dem ersten Gerätebereich (101) zu dem zweiten Gerätebereich (102) im Rahmen der Energieübertragung übertragbaren elektrischen Leistung hervorzurufen, und
wobei der erste Gerätebereich (101) der Feldgeräte (100) einen Einschaltstrombegrenzer (250) aufweist, welcher ausgebildet ist, einen Einschaltstrom bei einem Beginn der elektrischen Energieversorgung zu begrenzen,
**dadurch gekennzeichnet, dass**
das Einspeisegerät (400) eine Überwachungseinrichtung (410) aufweist, welche ausgebildet ist, eine Funkenentstehung bei der elektrischen Energieversorgung zu erfassen und hierauf basierend die elektrische Energieversorgung abzuschalten,
der erste Gerätebereich (101) der Feldgeräte (100) eine Entkopplungseinrichtung (200) aufweist, welche ausgebildet ist, eine vorgegebene Eingangsimpedanz für das Erfassen der Funkenentstehung bereitzustellen, und
der Einschaltstrombegrenzer (250) der Feldgeräte (100) zwischen der Entkopplungseinrichtung (200) und der Leistungsbegrenzungseinrichtung (300) angeordnet ist.

2. System nach Anspruch 1,
wobei die Leistungsbegrenzungseinrichtung (300) der Feldgeräte (100) ausgebildet ist, eine Strombegrenzung und eine Spannungsbegrenzung hervorzurufen.

3. System nach einem der vorhergehenden Ansprüche,
wobei der erste Gerätebereich (101) der Feldgeräte (100) ein internes Netzteil (132) aufweist, welches über die dem ersten Gerätebereich (101) zugeführte elektrische Energie elektrisch versorgbar ist.

4. System nach einem der vorhergehenden Ansprüche,
wobei der erste Gerätebereich (101) wenigstens eines Feldgeräts (100) wenigstens einen Ausgangsanschluss (111, 112) zum Anschließen einer weiteren Versorgungsleitung (500) aufweist, um die dem ersten Gerätebereich (101) zugeführte elektrische Energie weiterzuleiten.

5. System nach Anspruch 4,
wobei der erste Gerätebereich (101) des wenigstens einen Feldgeräts (100) eine zwischen dem Eingangsanschluss (110) und dem wenigstens einen Ausgangsanschluss (111, 112) angeordnete Schalteinrichtung (180, 181) aufweist, mit deren Hilfe das Weiterleiten der dem ersten Gerätebereich (101) zugeführten elektrischen Energie schaltbar ist.

6. System nach einem der vorhergehenden Ansprüche,
wobei die Feldgeräte (100) eine galvanische Trennung aufweisen, so dass die dem ersten Gerätebereich (101) zugeführte elektrische Energie auf getrennten elektrischen Stromkreisen geführt wird.

7. System nach einem der vorhergehenden Ansprüche,
wobei eine galvanische Trennung in dem ersten Gerätebereich (101) und/oder in der elektrischen Energieversorgungsverbindung (170) des ersten und zweiten Gerätebereichs (101, 102) ausgebildet ist.

8. System nach einem der vorhergehenden Ansprüche,
wobei der Eingangsanschluss (110) des ersten Gerätebereichs (101) der Feldgeräte (100) und, sofern vorhanden, wenigstens ein Ausgangsanschluss (111) des ersten Gerätebereichs (101) wenigstens eines Feldgeräts (100) gemäß einer ersten Zündschutzart ausgebildet ist, wobei der wenigstens eine Ausgangsleitungsanschluss (165) des zweiten Gerätebereichs (102) der Feldgeräte (100) gemäß einer zweiten Zündschutzart ausgebildet ist, und wobei die zweite Zündschutzart einem größeren Schutzniveau entspricht als die erste Zündschutzart.

9. System nach einem der vorhergehenden Ansprüche,
wobei die Feldgeräte (100) zum Durchführen einer Datenkommunikation ausgebildet sind,
indem der erste Gerätebereich (101) wenigstens einen Kommunikationsanschluss (120) zum Anschließen einer Datenleitung zum Empfangen und/oder Senden von Datensignalen und einen mit dem wenigstens einen Kommunikationsanschluss (120) verbundenen Kommunikationscontroller (150) aufweist,
wobei der Kommunikationscontroller (150) über eine Kommunikationsverbindung (175) mit der Anschlusseinrichtung (160) des zweiten Gerätebereichs (102) verbunden ist, um Datensignale über die Anschlusseinrichtung (160) zu empfangen und/oder zu senden, und
wobei die Kommunikationsverbindung (175) des Kommunikationscontrollers (150) und der Anschlusseinrichtung (160) eine Barriereeinrichtung (155) aufweist, welche ausgebildet ist, eine Begrenzung einer von dem Kommunikationscontroller (150) zu der Anschlusseinrichtung (160) bei einer Datenkommunikation übertragbaren elektrischen Leistung und/oder eine galvanische Trennung hervorzurufen.

10. System nach Anspruch 9,
wobei die Anschlusseinrichtung (160) der Feldgeräte (100) einen Eingabe/Ausgabe-Controller (161) aufweist, welcher ausgebildet ist, wenigstens eines von Folgendem zu steuern:
Empfangen und/oder Senden von Datensignalen über die Anschlusseinrichtung (160); und
Weiterleiten von elektrischer Energie über die Anschlusseinrichtung (160).

11. System nach einem der Ansprüche 9 oder 10,
wobei die Feldgeräte (100) ausgebildet sind, eine Datenkommunikation über den wenigstens einen Kommunikationsanschluss (120) des ersten Gerätebereichs (101) gemäß eines ersten Kommunikationsprotokolls durchzuführen, und
wobei die Feldgeräte (100) ausgebildet sind, eine Datenkommunikation über die Anschlusseinrichtung (160) des zweiten Gerätebereichs (102) gemäß eines zweiten und sich von dem ersten Kommunikationsprotokoll unterscheidenden zweiten Kommunikationsprotokolls durchzuführen.

12. System nach einem der Ansprüche 9 bis 11,
wobei zwischen dem Kommunikationscontroller (150) und dem wenigstens einen Kommunikationsanschluss (120) des ersten Gerätebereichs (101) der Feldgeräte (100) wenigstens eines von Folgendem angeordnet ist:
eine physikalische Schnittstelle (145); und
eine Barriereschaltung (140), welche ausgebildet ist, eine Begrenzung einer zu dem Kommunikationsanschluss (120) des ersten Gerätebereichs (101) bei einer Datenkommunikation übertragbaren elektrischen Leistung und/oder eine galvanische Trennung hervorzurufen.

13. System nach einem der Ansprüche 9 bis 12,
wobei der Eingangsanschluss (110) der Feldgeräte (100) in Form eines den wenigstens einen Kommunikationsanschluss (120) umfassenden Hybridanschlusses ausgebildet ist, an welchem eine in Form einer Hybridleitung ausgebildete Versorgungsleitung (500) anschließbar ist.

14. System nach einem der Ansprüche 9 bis 13, soweit auf Anspruch 4 rückbezogen, wobei der wenigstens eine Ausgangsanschluss (111, 112) des wenigstens einen Feldgeräts (100) in Form eines einen Kommunikationsanschluss (121, 122) umfassenden weiteren Hybridanschlusses ausgebildet ist, an welchem eine in Form einer Hybridleitung ausgebildete weitere Versorgungsleitung (500) anschließbar ist.

15. System nach einem der vorhergehenden Ansprüche,
wobei das Einspeisegerät (400) zum Durchführen einer Datenkommunikation ausgebildet ist, und/oder
wobei das Einspeisegerät (400) über eine Versorgungsleitung (500) mit einem der Feldgeräte (100) verbunden ist, und wobei die Feldgeräte (100) untereinander über weitere und jeweils zwei Feldgeräte (100) verbindende Versorgungsleitungen (500) miteinander verbunden sind.

## Claims

1. A system (50) comprising a feed-in device (400) and a plurality of field devices (100) electrically connected to the feed-in device (400),
wherein the feed-in device (400) is configured to provide an electrical energy for electrical energy supply to the field devices (100),
wherein the field devices (100) each comprise a first device section (101) having an input terminal (110) for connecting a supply line (500), and a second device section (102),
wherein the electrical energy provided by the feed-in device (400) may be supplied to the first device section (101) via the input terminal (110) and may be transmitted from the first device section (101) to the second device section (102) via an electrical energy supply connection (170),
wherein the second device section (102) comprises a terminal device (160) having at least one output line terminal (165) for connecting at least one output line (510) to forward the electrical energy transmitted to the second device section (102), and
wherein the electrical energy supply connection (170) of the first and second device sections (101, 102) comprises a power limiting device (300) configured to cause a limitation of an electrical power transmittable from the first device section (101) to the second device section (102) in the course of the energy transmission, and
wherein the first device section (101) of the field devices (100) comprises an inrush current limiter (250), which is configured to limit an inrush current at a start of the electrical energy supply,
**characterized in that**
the feed-in device (400) comprises a monitoring device (410) which is configured to detect a spark generation in the electrical energy supply and, based on this, to switch off the electrical energy supply,
the first device section (101) of the field devices (100) comprises a decoupling device (200) configured to provide a predetermined input impedance for detecting the spark generation, and
the inrush current limiter (250) of the field devices (100) is arranged between the decoupling device (200) and the power limiting device (300).

2. The system according to claim 1,
wherein the power limiting device (300) of the field devices (100) is configured to cause current limiting and voltage limiting.

3. The system according to any one of the preceding claims,
wherein the first device section (101) of the field devices (100) comprises an internal power supply device (132), which may be electrically supplied via the electrical energy supplied to the first device section (101).

4. The system according to any one of the preceding claims,
wherein the first device section (101) of at least one field device (100) comprises at least one output terminal (111, 112) for connecting a further supply line (500) to forward the electrical energy supplied to the first device section (101).

5. The system according to claim 4,
wherein the first device section (101) of the at least one field device (100) comprises a switching device (180, 181) arranged between the input terminal (110) and the at least one output terminal (111, 112), with the aid of which the forwarding of the electrical energy supplied to the first device section (101) is switchable.

6. The system according to any one of the preceding claims,
wherein the field devices (100) comprise a galvanic isolation so that the electrical energy supplied to the first device section (101) is conducted on separate electrical circuits.

7. The system according to any one of the preceding claims,
wherein a galvanic isolation is formed in the first device section (101) and/or in the electrical energy supply connection (170) of the first and second device sections (101, 102).

8. The system according to any one of the preceding claims,
wherein the input terminal (110) of the first device section (101) of the field devices (100) and, if present, at least one output terminal (111) of the first device section (101) of at least one field device (100) is configured according to a first type of ignition protection, wherein the at least one output line terminal (165) of the second device section (102) of the field devices (100) is configured according to a second type of ignition protection, and wherein the second type of ignition protection corresponds to a higher level of protection than the first type of ignition protection.

9. The system according to any one of the preceding claims,
wherein the field devices (100) are configured to carry out data communication,
in that the first device section (101) comprises at least one communication terminal (120) for connecting a data line for receiving and/or transmitting data signals and a communication controller (150) connected to the at least one communication terminal (120),
wherein the communication controller (150) is connected to the terminal device (160) of the second device section (102) via a communication connection (175) for receiving and/or transmitting data signals via the terminal device (160), and
wherein the communication connection (175) of the communication controller (150) and of the terminal device (160) comprises a barrier device (155) which is configured to cause a limitation of an electrical power transmittable from the communication controller (150) to the terminal device (160) during data communication and/or a galvanic isolation.

10. The system according to claim 9,
wherein the terminal device (160) of the field devices (100) comprises an input/output controller (161) configured to control at least one of the following:
receiving and/or transmitting data signals via the terminal device (160); and
forwarding electrical energy via the terminal device (160).

11. The system according to any one of claims 9 or 10,
wherein the field devices (100) are configured to carry out data communication via the at least one communication terminal (120) of the first device section (101) according to a first communication protocol, and
wherein the field devices (100) are configured to carry out data communication via the terminal device (160) of the second device section (102) according to a second communication protocol different from the first communication protocol.

12. The system of any one of claims 9 to 11,
wherein at least one of the following is arranged between the communication controller (150) and the at least one communication terminal (120) of the first device section (101) of the field devices (100):
a physical interface (145); and
a barrier circuit (140) configured to cause a limitation of an electrical power transmittable to the communication terminal (120) of the first device section (101) during data communication and/or a galvanic isolation.

13. The system according to any one of claims 9 to 12,
wherein the input terminal (110) of the field devices (100) is configured as a hybrid terminal comprising the at least one communication terminal (120), to which a supply line (500) configured as a hybrid line may be connected.

14. The system according to any one of claims 9 to 13, as far as it refers back to claim 4, wherein the at least one output terminal (111, 112) of the at least one field device (100) is configured as a further hybrid terminal comprising a communication terminal (121, 122), to which a further supply line (500) configured as a hybrid line may be connected.

15. The system according to any one of the preceding claims,
wherein the feed-in device (400) is configured to perform data communication, and/or
wherein the feed-in device (400) is connected to one of the field devices (100) via a supply line (500), and wherein the field devices (100) are connected to one another via further supply lines (500) connecting two field devices (100) in each case.

## Revendications

1. Système (50), comprenant un appareil d'alimentation (400) et plusieurs appareils de terrain (100) reliés électriquement à l'appareil d'alimentation (400),
dans lequel l'appareil d'alimentation (400) est réalisé pour fournir de l'énergie électrique pour l'alimentation en énergie électrique des appareils de terrain (100),
dans lequel les appareils de terrain (100) présentent respectivement une première zone d'appareil (101) pourvue d'une borne d'entrée (110) pour connecter une ligne d'alimentation (500), et une deuxième zone d'appareil (102),
dans lequel l'énergie électrique fournie par l'appareil d'alimentation (400) peut être acheminée à la première zone d'appareil (101) par l'intermédiaire de la borne d'entrée (110) et peut être transmise de la première zone d'appareil (101) à la deuxième zone d'appareil (102) par l'intermédiaire d'une liaison d'alimentation en énergie électrique (170),
dans lequel la deuxième zone d'appareil (102) présente un dispositif de connexion (160) pourvu d'au moins une borne de ligne de sortie (165) pour connecter au moins une ligne de sortie (510) afin de retransmettre l'énergie électrique transmise à la deuxième zone d'appareil (102),
dans lequel la liaison d'alimentation en énergie électrique (170) de la première et de la deuxième zone d'appareil (101, 102) présente un dispositif de limitation de puissance (300) qui est réalisé pour provoquer une limitation d'une puissance électrique transmissible de la première zone d'appareil (101) à la deuxième zone d'appareil (102) dans le cadre de la transmission d'énergie, et
dans lequel la première zone d'appareil (101) des appareils de terrain (100) présente un limiteur de courant de fermeture de circuit (250) qui est réalisé pour limiter un courant de fermeture de circuit au début de l'alimentation en énergie électrique,
**caractérisé en ce que**
l'appareil d'alimentation (400) présente un dispositif de surveillance (410) qui est réalisé pour détecter une formation d'étincelles lors de l'alimentation en énergie électrique et pour couper l'alimentation en énergie électrique sur cette base,
la première zone d'appareil (101) des appareils de terrain (100) présente un dispositif de découplage (200) qui est réalisé pour fournir une impédance d'entrée prédéfinie pour la détection de la formation d'étincelles, et
le limiteur de courant de fermeture de circuit (250) des appareils de terrain (100) est disposé entre le dispositif de découplage (200) et le dispositif de limitation de puissance (300).

2. Système selon la revendication 1, dans lequel le dispositif de limitation de puissance (300) des appareils de terrain (100) est réalisé pour provoquer une limitation de courant et une limitation de tension.

3. Système selon l'une quelconque des revendications précédentes, dans lequel la première zone d'appareil (101) des appareils de terrain (100) présente un bloc d'alimentation interne (132) qui peut être alimenté électriquement par l'énergie électrique acheminée à la première zone d'appareil (101).

4. Système selon l'une quelconque des revendications précédentes, dans lequel la première zone d'appareil (101) d'au moins un appareil de terrain (100) présente au moins une borne de sortie (111, 112) pour connecter une ligne d'alimentation (500) supplémentaire afin de retransmettre l'énergie électrique acheminée à la première zone d'appareil (101).

5. Système selon la revendication 4, dans lequel la première zone d'appareil (101) dudit au moins un appareil de terrain (100) présente un dispositif de commutation (180, 181) disposé entre la borne d'entrée (110) et ladite au moins une borne de sortie (111, 112) et à l'aide duquel la retransmission de l'énergie électrique acheminée à la première zone d'appareil (101) peut être commutée.

6. Système selon l'une quelconque des revendications précédentes, dans lequel les appareils de terrain (100) présentent une séparation galvanique de sorte que l'énergie électrique acheminée à la première zone d'appareil (101) est conduite sur des circuits électriques séparés.

7. Système selon l'une quelconque des revendications précédentes, dans lequel une séparation galvanique dans la première zone d'appareil (101) et/ou dans la liaison d'alimentation en énergie électrique (170) de la première et de la deuxième zone d'appareil (101, 102) est réalisée.

8. Système selon l'une quelconque des revendications précédentes, dans lequel la borne d'entrée (110) de la première zone d'appareil (101) des appareils de terrain (100), et le cas échéant au moins une borne de sortie (111) de la première zone d'appareil (101) d'au moins un appareil de terrain (100), est réalisée selon un premier type de protection Ex, dans lequel ladite au moins une borne de ligne de sortie (165) de la deuxième zone d'appareil (102) des appareils de terrain (100) est réalisée selon un deuxième type de protection Ex, et dans lequel le deuxième type de protection Ex correspond à un niveau de protection supérieur à celui du premier type de protection Ex.

9. Système selon l'une quelconque des revendications précédentes,
dans lequel les appareils de terrain (100) sont réalisés pour effectuer une communication de données,
en ce que la première zone d'appareil (101) présente au moins une borne de communication (120) pour connecter une ligne de données afin de recevoir et/ou d'émettre des signaux de données, et un contrôleur de communication (150) relié à ladite au moins une borne de communication (120),
dans lequel le contrôleur de communication (150) est relié au dispositif de connexion (160) de la deuxième zone d'appareil (102) par l'intermédiaire d'une liaison de communication (175) afin de recevoir et/ou d'émettre des signaux de données par l'intermédiaire du dispositif de connexion (160), et
dans lequel la liaison de communication (175) du contrôleur de communication (150) et du dispositif de connexion (160) présente un dispositif de barrière (155) qui est réalisé pour provoquer une limitation d'une puissance électrique transmissible du contrôleur de communication (150) au dispositif de connexion (160) lors d'une communication de données, et/ou une séparation galvanique.

10. Système selon la revendication 9, dans lequel le dispositif de connexion (160) des appareils de terrain (100) présente un contrôleur d'entrée/sortie (161) qui est réalisé pour commander au moins l'une des étapes suivantes consistant à :
recevoir et/ou émettre des signaux de données par l'intermédiaire du dispositif de connexion (160) ; et
retransmettre de l'énergie électrique par l'intermédiaire du dispositif de connexion (160).

11. Système selon l'une quelconque des revendications 9 ou 10,
dans lequel les appareils de terrain (100) sont réalisés pour effectuer une communication de données par l'intermédiaire de ladite au moins une borne de communication (120) de la première zone d'appareil (101) selon un premier protocole de communication, et
dans lequel les appareils de terrain (100) sont réalisés pour effectuer une communication de données par l'intermédiaire du dispositif de connexion (160) de la deuxième zone d'appareil (102) selon un deuxième protocole de communication différent du premier protocole de communication.

12. Système selon l'une quelconque des revendications 9 à 11,
dans lequel entre le contrôleur de communication (150) et ladite au moins une borne de communication (120) de la première zone d'appareil (101) des appareils de terrain (100) est disposé au moins l'un des éléments suivants :
une interface physique (145) ; et
un circuit barrière (140) qui est réalisé pour provoquer une limitation d'une puissance électrique transmissible à la borne de communication (120) de la première zone d'appareil (101) lors d'une communication de données, et/ou une séparation galvanique.

13. Système selon l'une quelconque des revendications 9 à 12, dans lequel la borne d'entrée (110) des appareils de terrain (100) est réalisée sous la forme d'une borne hybride comprenant ladite au moins une borne de communication (120) à laquelle une ligne d'alimentation (500) réalisée sous la forme d'une ligne hybride peut être connectée.

14. Système selon l'une quelconque des revendications 9 à 13, dans la mesure où elles dépendent de la revendication 4, dans lequel ladite au moins une borne de sortie (111, 112) dudit au moins un appareil de terrain (100) est réalisée sous la forme d'une borne hybride supplémentaire comprenant la borne de communication (121, 122) et à laquelle peut être connectée une ligne d'alimentation (500) supplémentaire réalisée sous la forme d'une ligne hybride.

15. Système selon l'une quelconque des revendications précédentes,
dans lequel l'appareil d'alimentation (400) est réalisé pour effectuer une communication de données, et/ou
dans lequel l'appareil d'alimentation (400) est relié par une ligne d'alimentation (500) à l'un des appareils de terrain (100), et dans lequel les appareils de terrain (100) sont reliés les uns aux autres par des lignes d'alimentation (500) supplémentaires et reliant respectivement deux appareils de terrain (100).
